# EUROPEAN PATENT APPLICATION

(11) **EP 4 120 148 A1**
(43) Date of publication of application: **18.01.2023**
(21) Application number: 21766836.7
(22) Date of filing: 10.02.2021
(51) Int. Cl.: G06N 20/00

(54) **PARAMETER ADJUSTING DEVICE, INFERENCE DEVICE, PARAMETER ADJUSTING METHOD, AND PARAMETER ADJUSTING PROGRAM**

(30) Priority: 11.03.2020 JP 2020042119
(71) Applicant: OMRON Corporation, Kyoto-shi, Kyoto 600-8530 (JP)
(72) Inventor: IMAI, Hiroshi, Kyoto-shi, Kyoto 600-8530 (JP); YONETANI, Ryo, Tokyo 113-0033 (JP); MIYAURA, Hiroyuki, Kyoto-shi, Kyoto 600-8530 (JP)
(74) Representative: Horn Kleimann Waitzhofer Patentanwälte PartG mbB
(86) International application number: PCT/JP2021/005063
(87) International publication number: WO 2021/182000

(57) **Abstract**

A parameter adjustment apparatus according to one aspect of the present invention calculates the degrees of association between an object inference task and existing inference tasks, according to the similarity in objective between the object inference task and the existing inference tasks, and determines a plurality of object weights that constitute an object weight set according to the calculated degrees of association, from a plurality of existing weights of existing weight sets indicated by existing task information.

## Description

### TECHNICAL FIELD

The present invention relates to a parameter adjustment apparatus, an inference apparatus, a parameter adjustment method, and a parameter adjustment program.

### RELATED ART

Heretofore, in scenarios in which products are produced in production lines and the like, a technique is used in which the products to be produced are observed by sensors, and the quality of the products are inspected based on the obtained observation data. For example, Patent Document 1 proposes an inspection apparatus that determines whether an object to be inspected in an image is normal or anomalous based on a trained first neural network, and if it is determined that the object to be inspected is anomalous, classifies the type of the anomaly based on a trained second neural network.

As a result of using a machine learning model such as a neural network, an inference model that has acquired the capability of executing a desired inference task can be generated by performing machine learning in which learning data is used. Therefore, by performing machine learning using image data of products whose qualities are specified as learning data, an inference model that can be used for inspecting products can be generated (e.g., aforementioned Patent Document 1). Note that the method for generating this type of inference model is not limited to a method in which machine learning is utilized. For example, an inference model that has acquired the capability of executing a predetermined inference task can be generated based on learning data using a method other than machine learning, such as rule formation by manpower, for example.

### RELATED ART DOCUMENT

### PATENT DOCUMENT

Patent Document 1: JP 2012-026982A

### NON-PATENT DOCUMENT

Non-Patent Document 1: "Decentralized learning technique "Decentralized X"", [online], [Searched on march 11, 2020], the Internet <URL:https://www.omron.co.jp/technology/information/brand/dcx/index.html>

### SUMMARY OF THE INVENTION

### PROBLEM TO BE SOLVED BY THE INVENTION

The inventors of the present invention found that these known product inspection methods in which an inference model is used have the following problem. For example, it is assumed that the product observation conditions such as production line, factory, sensor model number, arrangement of photographing apparatus relative to products, shooting angle, lighting conditions, ambient light conditions, and background pattern differ between the environment in which the learning data is acquired (hereinafter, referred to as "learning environment") and the environment in which product inspection is performed (hereinafter, referred to as "inspection environment"). In this case, the state of products in obtained observation data differs due to the differences in the observation conditions between the learning environment and the inspection environment, and therefore it is possible that the inference model generated in the learning environment cannot appropriately exert the capability of inspecting products in the inspection environment. That is, it is possible that the accuracy of inspection utilizing the inference model degrades due to the differences in the observation conditions between the learning environment and the inspection environment.

One of the simplest methods for dealing with this problem is to generate a new inference model every time the observation conditions differ. That is, new learning data is collected in observation conditions that are the same as or similar to the object inspection environment, and a new inference model is generated based on the obtained learning data. When the inference model is constituted by a machine learning model, generating a new inference model may include performing additional training. With the newly generated inference model, the product inspection can be appropriately executed in the object inspection environment. However, generating a new inference model every time the observation conditions differ is extremely costly.

Therefore, it is conceivable to reduce costs by, when a plurality of inference models that are generated in different learning environments are already present, utilizing the plurality of existing inference models for inspecting products in the new environment, instead of generating a new inference model. That is, weights are applied to inference results of the inference models in order to make them suitable for inspecting products in the new observation conditions, and the weighted inference results of the inference models are integrated (that is, the plurality of inference models are used in ensemble manner). If the inference models include computation parameters used in a shared computation, integrating the inference results of the inference models may be integrating the values of each of the computation parameters of the inference models (e.g., Non-Patent Document 1). The weights of the inference models may be determined as appropriate to be suitable for inspecting products in the new observation conditions. The number of weights (ensemble parameters) applied to the inference models is smaller than that in the case where an inference model is newly generated, and the time and effort for adjusting the weights is small. Therefore, with this method, since the time and effort for newly generating an inference model can be omitted, the costs needed to adapt to a new environment can be kept low while ensuring the inspection accuracy.

However, there are cases where, in accordance with various situations such as the product to be inspected being changed, and a new defect being added to the object to be detected, as a result of changing the premise or conditions regarding the inspection, an inference task that is different from the original inference task is set, for example. When a situation in which a plurality of different inference tasks are set is envisioned, even if a plurality of inference models that differ for the respective inference tasks are given in advance, it takes time and effort for adjusting, for each inference task, the weights applied to the inference models, and therefore it is estimated to be still costly.

Note that the application to a new environment described above is merely one example of reasons for integrating the inference results of a plurality of inference models. The aforementioned problem may arise in any scenario in which the inference results of a plurality of inference models are integrated for some reason. For example, solving a higher-order inference task using the inference results of a plurality of inference models is another example of the reason for integrating the inference results of the plurality of inference models. In the defect inspection described above, one specific example of solving a higher-order inference task is to inspect whether or not a defect occurs in products by integrating the inference results of a plurality of inference models for detecting different types of defects.

For example, for each type of product defects such as flaw, depression, and contamination, an inference model is generated for detecting the defect. It is possible to inspect whether or not a defect occurs in a product by integrating the inference results of the plurality of generated inference models. However, there are cases where, in accordance with various situations such as the product for which a defect is detected being changed, and defect detection being performed in a different production line (or a factory), for example, an inference task that is different from the original inference task is set by changing the premise or conditions regarding the inspection. In these cases, it takes time and effort for adjusting, for each inference task, the weights to be applied to the inference model, as described above, and therefore it is estimated to be still costly.

Also, the aforementioned case of visually inspecting products is merely an exemplary case where an inference task is solved using a plurality of inference models. The aforementioned problem may arise in any scenario in which an inference task is solved using a plurality of inference models, in any case. In addition to the aforementioned case of visually inspecting products, examples of a case where an inference task is solved using a plurality of inference models include a case where an event related to weather or an event influenced by weather is inferred based on observation data regarding weather, a case where an event related to the flow of people or an event influenced by the flow of people is inferred based on observation data regarding a flow of people or an event that influences the flow of people, and a case where an event related to the state of a person is inferred based on observation data regarding the state of the person, for example. In these cases as well, if a situation is envisioned in which a plurality of different inference tasks are set, it takes time and effort for adjusting, for each inference task, the weights to be applied to the inference model, and therefore it is estimated to be still costly.

The present invention has been made in view of the foregoing situation, in one aspect, and aims to provide a technique for reducing the costs for introducing a plurality of inference models, in a situation in which a plurality of different inference tasks are set, in order to solve the object inference task.

### MEANS FOR SOLVING THE PROBLEMS

The present invention adopts the following configuration in order to solve the problem stated above.

That is, a parameter adjustment apparatus according to one aspect of the present invention includes an information acquiring unit, a degree of association calculating unit, and a weight determining unit. The information acquiring unit acquires existing task information regarding a plurality of existing inference tasks. A plurality of existing inference models has been generated for each existing inference task based on sets of existing learning data respectively obtained by a plurality of different sensor groups such that the existing inference models are respectively configured to carry out existing related tasks related to the existing inference task, and the existing inference tasks are each solved by integrating inference results of the corresponding existing inference models. The existing task information indicates a plurality of existing weight sets that are each constituted by a plurality of existing weights for specifying priorities of inference results of corresponding existing inference models when integrating the inference results of the existing inference models, the existing weight sets being determined such that the respective existing inference tasks are appropriately carried out. The degree of association calculating unit calculates degrees of association between an object inference task and the existing inference tasks, according to similarities in objective between the object inference task and the existing inference tasks. The weight determining unit determines a plurality of object weights constituting an object weight set, according to the calculated degrees of association, from the plurality of existing weights of each of the plurality of existing weight sets that are indicated by the existing task information. A plurality of object inference models are generated based on object learning data obtained by the plurality of different sensor groups such that the object inference models are configured to respectively carry out object related tasks related to the object inference task, and the object inference task being solved by integrating inference results of the object inference models. The determined object weights of the object weight set are used to specify, when integrating the inference results of the object inference models, priorities of inference results of the corresponding object inference models.

For example, in a case of the above-described visual inspection, a scenario is envisioned in which the inference task is changed by switching the product to be inspected. In this scenario, when the new product is similar to the original product (that is, the material objects related to inference tasks are similar to each other), elements regarding products that appear in observation data are similar to each other, and therefore the details of computation processes for solving tasks for detecting defects from observation data are similar. The elements regarding products that appear in observation data include how the products appear, a defect appearance frequency, how defects appear, and the like. Therefore, in an environment in which learning data has been obtained that has been used to generate an inference model having a high priority in an original inference task, it is very likely that learning data can be obtained with which an inference model having a high priority with respect to a new inference task as well can be generated. In other words, in an environment in which learning data useful for an original inference task has been obtained, it is very likely that learning data useful for a new inference task has been obtained as well. Therefore, the priority of a new inference model generated from learning data obtained in this environment may be high in a new inference task as well.

Therefore, in these cases, it is estimated that it is very likely that the weights set to a plurality of new inference models in order to solve a new inference task are similar to the weights that are set to a plurality of existing inference models in order to solve an original inference task (in some cases, the weight set of an original inference task can be used for a new inference task as is). In other words, the weight set used in an existing inference task can also be utilized in a new inference task (that is, a new inference task can be appropriately carried out with weights that are the same as or similar to existing weights). In contrast, when a new product is not similar to an original product, it is not known whether or not learning data that is useful for a new inference task can be obtained in an environment in which learning data useful for an original inference task has been obtained. Therefore, it is estimated that the likelihood that the weights set to a new inference model is similar to the weights set to an existing inference model is low.

It is estimated that the relationship in weights to be set between a new inference task and an existing inference task is similarly established in other scenarios such as a scenario in which different types of defects are detected, and a scenario of applying to a different production line or a factory. Also, it is estimated that this relationship in weight is similarly established in other cases such as a case in which the aforementioned inference task regarding weather is solved. For example, a case is envisioned in which a plurality of inference models for predicting weather at a plurality of observation points in a district are generated in advance, and there is a history of determining weights for a plurality of inference models for comprehensively predicting the weather in this district. In this case, when a task for estimating events that are highly related to weather such as humidity, a duration of sunshine, and a solar power generation amount is set as a new inference task, it is estimated that the weight set used for predicting weather can also be used for the new inference task. In contrast, when a task for estimating events that are not related to weather is set as a new inference task, it is estimated that the likelihood that the weight set used for predicting weather can also be used for the new inference task is low.

That is, when the objectives are similar between a new inference task and an existing inference task, and the degree of association therebetween is high, it is estimated that it is very likely that the weight set used in the existing inference task can also be utilized in the new inference task. In contrast, when the objectives are not similar between a new inference task and an existing inference task, and the degree of association therebetween is low, it is estimated that the likelihood that the weight set used in the existing inference task can be utilized in the new inference task is low.

According to this configuration, based on these technological aspects, the task for determining a plurality of weights to be used in a new inference task is automated by utilizing history information regarding weight sets that have been used in a plurality of existing inference tasks. That is, the degrees of association between a plurality of existing inference tasks and an object inference task (new inference task) are calculated from the similarity in objective therebetween. Also, the weight set to be used in the object inference task is determined from the weight sets used in the plurality of existing inference tasks according to the calculated degrees of association. Accordingly, at least some of the operations for determining the weights for the inference models to be used for solving an object inference task can be automated, and therefore the costs for the operations can be reduced. Therefore, according to the configuration, in a situation in which a plurality of different inference tasks are set, the costs for introducing a plurality of inference models in order to solve an object inference task can be reduced.

The parameter adjustment apparatus according to the aforementioned one aspect may further include an output unit configured to output weight information indicating the object weight set, to an inference apparatus that uses the plurality of object inference models. According to this configuration, as a result of including an output unit, the time and effort for applying an object weight set used to carry out an object inference task to an inference apparatus can be reduced.

In the parameter adjustment apparatus according to the aforementioned one aspect, the degrees of association may be calculated from distances between locations related to the existing inference tasks and a location related to the object inference task. That is, the similarities in objective between the object inference task and the existing inference tasks may be calculated (evaluated) based on the distances between locations related to those inference tasks. For example, a scenario is envisioned in which, using a plurality of inference models that respectively estimate traffic volumes (flow of people) of vehicle, person, and the like from sets of observation data that are respectively obtained at a plurality of different learning points, inference tasks for respectively estimating traffic volumes at a plurality of different inference points that are different from the plurality of different learning points are solved. In this scenario, it is estimated that, as the distance between inference points decreases, the tendency in traffic volume between the inference points is more similar, and as the distance between inference points increases, the tendency in traffic volume between the inference points is less similar. That is, as described in the technological aspect, it is estimated that it is very likely that the weights set to existing inference models in order to estimate the traffic volumes at an existing inference point can be utilized as the weights to be set to object inference models in order to estimate the traffic volume at an object inference point that is closer in distance to the existing inference point. Therefore, according to the configuration, in this case of solving an inference task that may depend on the observation point, the degrees of association between the object inference task and the existing inference tasks can be appropriately calculated, and accordingly, the operations for determining the object weight set suitable for the object inference task can be automated. Note that it is estimated that the similar tendency is established in another inference task that may depend on the observation point such as weather prediction, for example. Therefore, the method of evaluating the similarity in objective based on the distance between related locations is not limited to the above-described case, and may be applied to other inference tasks that may depend on the observation points.

In the parameter adjustment apparatus according to the aforementioned one aspect, the degrees of association may be calculated from semantic similarities between terms that respectively indicate the existing inference tasks and the object inference task, the semantic similarities being measured by language processing. That is, the similarities in objective between the object inference task and the existing inference tasks may be calculated (evaluated) based on the semantic similarities between terms that respectively indicate those tasks. For example, there are cases where the objective of an inference task is verbalized based on, in the case of above-described visual inspection, a name of product to be inspected, a defect type, or identification information of a production line or factory, and in the case of above-described weather-related inference task, a name of event regarding which estimation is performed. In these cases, the similarity in objective between inference tasks such as the similarity between products in the case of visual inspection, or the similarity between events regarding which estimation is performed in the case of weather-related inference task, can be directly evaluated from the semantic similarities between terms. Therefore, according to the configuration, in the case in which the objective of an inference task is verbalized, the degrees of association between the object inference task and the existing inference tasks can be appropriately calculated, and accordingly, the operations for determining the object weight set suitable for the object inference task can be automated.

In the parameter adjustment apparatus according to the aforementioned one aspect, the degrees of association may be calculated from degrees of similarity between material objects respectively related to the existing inference tasks and the object inference task. That is, the degrees of similarity in objective between the object inference task and the existing inference tasks may be calculated (or evaluated) based on the degrees of similarity between material objects related to those tasks. The material objects related to inference tasks include products to be inspected, and defects to be detected, in the case of visual inspection, for example. As described above, if the material object is similar between the existing inference tasks and object inference task, it is very likely that the existing weight set can be utilized as the object weight set. Therefore, according to the configuration, the degrees of association between the object inference task and the existing inference tasks can be appropriately calculated based on the degrees of similarity between material objects related to the inference tasks, and accordingly, the operations for determining the object weight set suitable for the object inference task can be automated.

In the parameter adjustment apparatus according to the aforementioned one aspect, the degrees of association may be calculated from degrees of similarity between environments in which the existing inference tasks and the object inference task are respectively carried out. That is, the degrees of similarity in objective between the object inference task and the existing inference tasks may be calculated (or evaluated) based on the degrees of similarity between environments in which the tasks are carried out. For example, in the case of visual inspection, it is assumed that the observation conditions such as the arrangement of sensors relative to products, the sensor angles, and the lighting conditions are similar between an existing site and an object site, for example. In this case, elements regarding products that appear in the obtained observation data are similar, and therefore it is estimated that it is very likely that the weight set determined in the existing site can be utilized in the object site as well. That is, if the environment is similar between the existing inference tasks and the object inference task, it is estimated that it is very likely that the existing weight set used in the existing inference tasks can also be utilized as the object weight set to be used in the object inference task. According to the configuration, based on this aspect, the degrees of association between the object inference tasks and the existing inference tasks can be appropriately calculated, and accordingly, the operations for determining the object weight set suitable for the object inference task can be automated. Note that the environments may be measured by sensors that are different from the sensor groups.

In the parameter adjustment apparatus according to the aforementioned one aspect, integrating the inference results of the object inference models may be constituted by performing weighted majority decision on the inference results of the plurality of object inference models according to the plurality of object weights. According to the configuration, when the inference performed by the object inference models is identification (sorting), the inference results of the object inference models can be appropriately integrated, and accordingly, the result of solving the object inference task can be derived. Note that the same applies to the existing inference tasks. That is, integrating the inference results of the existing inference models may be constituted by performing weighted majority decision on the inference results of the plurality of existing inference models according to the plurality of existing weights.

In the parameter adjustment apparatus according to the aforementioned one aspect, the inference results of the object inference models may be constituted by numerical values. In accordance therewith, integrating the inference results of the object inference models may be constituted by weighting inference results of the plurality of object inference models according to the plurality of object weights, and calculating an average or a total sum of the weighted inference results. According to the configuration, when the inference performed by the object inference models is regression, the inference results of the object inference models can be appropriately integrated, and accordingly, the result of solving the object inference task can be derived. Note that the same applies to the existing inference tasks. That is, the inference results of the existing inference models may be constituted by numerical values. In accordance therewith, integrating the inference results of the existing inference models may be constituted by weighting inference results of the plurality of existing inference models according to the plurality of existing weights, and calculating an average or a total sum of the weighted inference results.

In the parameter adjustment apparatus according to the aforementioned one aspect, the object inference models may include one or more computation parameters to be used in a shared computation of the object related tasks. In accordance therewith, integrating the inference results of the object inference models may be constituted by weighting values of the one or more computation parameters of the object inference models according to the object weights, and calculating an average or a total sum of values of the weighted one or more computation parameters of the object inference models. The object inference models may be constituted by neural networks, regression models (e.g., linear functions), function expressions including computation parameters such as decision trees, for example. In particular, when the object inference models are generated by machine learning, the object inference models are constituted by function expressions. When the object inference models are constituted by neural networks, the weights of connection between neurons, and the threshold values of the neurons are examples of the computation parameters. Also, when the object inference models are constituted by regression models, the coefficients and constant terms are examples of the computation parameters. In these cases, the object inference models may be configured to include one or more computation parameters to be used in a shared computation of the tasks, by at least partially (totally, in some cases) sharing the structures of the object inference models. According to the configuration, when the object inference models include computation parameters to be used in a shared computation, the inference results can be appropriately integrated through integration of the object inference models, and as a result, the result of solving the object inference task can be derived. Note that the same applies to the existing inference tasks. That is, the existing inference models may include one or more computation parameters to be used in a shared computation of the existing related tasks. In accordance therewith, integrating the inference results of the existing inference models may be constituted by weighting values of the one or more computation parameters of the existing inference models according to the existing weights, and calculating an average or a total sum of values of the weighted one or more computation parameters of the existing inference models.

The parameter adjustment apparatus according to the embodiments described above may be applied to any scenarios in which the inference results of a plurality of inference models are integrated due to any reason, in any cases. The inference tasks may be tasks to infer the quality of products, tasks to infer events regarding weather or events influenced by weather, tasks to infer events regarding the flow of people or events influenced by the flow of people, or tasks to infer the state of a person, for example. The type of date used in the inference task and the acquiring method may be selected as appropriate depending on the case.

Also, the mode of the present invention is not limited to the mode of the above-described parameter adjustment apparatus. One aspect of the present invention may also be an inference apparatus configured to carry out an object inference task using an existing weight set determined by the parameter adjustment apparatus. Note that the inference apparatus may be referred to as an inspection apparatus, an identification apparatus, a monitoring apparatus, an estimation apparatus, or the like, depending of the type of the object inference task.

For example, an inference apparatus according to one aspect of the present invention includes a data acquiring unit configured to acquire object data, an inference unit configured to solve the object inference task for the acquired object data, using the plurality of object inference models and the plurality of object weights of the object weight set determined by the parameter adjustment apparatus according to the aforementioned one aspect, and an output unit configured to output information regarding the result of solving the object inference task.

Also, as another aspect of the parameter adjustment apparatus and the inference apparatus according to the modes described above, one aspect of the invention may also be an information processing method for realizing some of or all of the configurations described above, a program, or a storage medium that can be read by an apparatus such as a computer, a machine, or the like, and stores such a program. Here, the storage medium that can be read by a computer or the like is a medium that stores information such as programs via an electrical, magnetic, optical, mechanical or chemical effect. Also, one aspect of the invention may also be an inference system constituted by the parameter adjustment apparatus and inference apparatus according to any of the above-described modes.

For example, a parameter adjustment method according to one aspect of the invention is an information processing method in which a computer executes: a step of acquiring existing task information regarding a plurality of existing inference tasks; a step of calculating degrees of association between an object inference task and the existing inference tasks according to the similarities in objective between the object inference task and the existing inference tasks; and a step of determining a plurality of object weights that constitute an object weight set from a plurality of existing weights of a plurality of existing weight sets that are indicated by the existing task information, according to the calculated degrees of association.

Also, for example, a parameter adjustment program according to one aspect of the invention is a program for causing a computer to execute: a step of acquiring existing task information regarding a plurality of existing inference tasks; a step of calculating degrees of association between an object inference task and the existing inference tasks according to the similarities in objective between the object inference task and the existing inference tasks; and a step of determining a plurality of object weights that constitute an object weight set from a plurality of existing weights of a plurality of existing weight sets that are indicated by the existing task information, according to the calculated degrees of association.

### EFFECTS OF THE INVENTION

According to the present invention, in a situation in which a plurality of different inference tasks are set, the costs for introducing a plurality of inference models in order to solve an object inference task can be reduced.

### BRIEF DESCRIPTION OF THE DRAWINGS

FIG. 1 schematically illustrates an example of a scenario to which the present invention is applied.
FIG. 2 schematically illustrates an example of a hardware configuration of a parameter adjustment apparatus according to the embodiment.
FIG. 3 schematically illustrates an example of a hardware configuration of a model generation apparatus according to the embodiment.
FIG. 4 schematically illustrates an example of a hardware configuration of an inference apparatus according to the embodiment.
FIG. 5 schematically illustrates an example of a software configuration of the parameter adjustment apparatus according to the embodiment.
FIG. 6 schematically illustrates an example of a software configuration of the model generation apparatus according to the embodiment.
FIG. 7 schematically illustrates an example of a software configuration of the inference apparatus according to the embodiment.
FIG. 8 illustrates an example of a procedure of the model generation apparatus according to the embodiment.
FIG. 9 illustrates an example of a procedure of the parameter adjustment apparatus according to the embodiment.
FIG. 10 illustrates an example of a configuration of existing task information according to the embodiment.
FIG. 11A schematically illustrates an example of an integration method according to the embodiment.
FIG. 11B schematically illustrates an example of the integration method according to the embodiment.
FIG. 12 illustrates an example of the inference apparatus according to the embodiment.
FIG. 13 schematically illustrates an example of another scenario to which the present invention is applied.
FIG. 14 schematically illustrates an example of another scenario to which the present invention is applied.
FIG. 15 schematically illustrates an example of another scenario to which the present invention is applied.
FIG. 16 schematically illustrates an example of another scenario to which the present invention is applied.

### EMBODIMENTS OF THE INVENTION

Hereinafter, an embodiment according to one aspect of the present invention (also referred to as "the present embodiment" below) will be described based on the drawings. However, the embodiment described below is merely an example of the present invention in every respect. Needless to say, various improvements and modifications may be made without departing from the scope of the present invention. That is to say, to implement the present invention, a specific configuration corresponding to that implementation may also be employed as appropriate. Note that, although data that is used in the embodiment is described using natural language, more specifically, the data is defined by pseudo-language, such data may be given by commands, parameters, machine language, or the like that can be recognized by a computer.

### 1. Application example

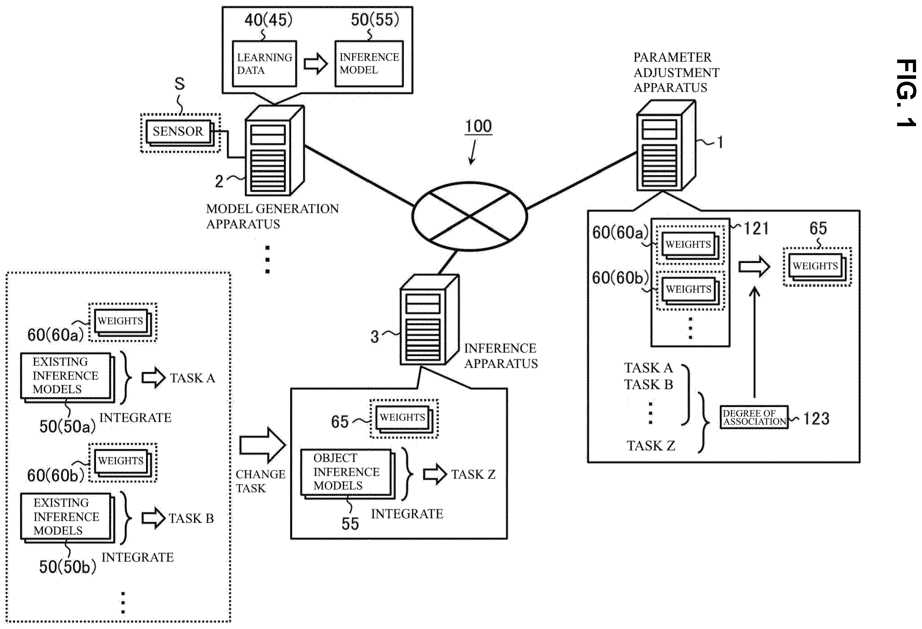

FIG. 1 schematically illustrates an example of a scenario to which the present invention is applied. An inference system 100 according to the present embodiment includes a parameter adjustment apparatus 1, a model generation apparatus 2, and an inference apparatus 3.

In the present embodiment, a scenario is envisioned in which a new inference task is given in circumstances such as the content of an existing inference task being changed or an inference task for a new objective being needed, for example, based on the premise that a plurality of inference tasks whose objectives are different to each other are already present. The inference tasks that are already present are examples of existing inference tasks, and the new inference task is an example of an object inference task (or target inference task). Also, a plurality of existing inference models 50 has been generated for each existing inference task in order to solve the existing inference task, and the existing inference task is solved by integrating the inference results of a plurality of existing inference models 50. When an existing inference task is solved (that is, when integrating the inference results of existing inference models 50), an existing weight set 60 is used. The existing weight set 60 is constituted by a plurality of existing weights for specifying the priorities of the inference results of existing inference models 50. The existing weight set 60 is prepared for each existing inference task. That is, a past record (track record) of generating a plurality of existing weight sets 60 is present. Furthermore, a plurality of object inference models 55 are prepared in order to solve an object inference task. The object inference task is solved by integrating the inference results of the plurality of object inference models 55, similarly to the existing inference tasks. In the present embodiment, a scenario is envisioned in which an object weight set 65 to be used for integrating the inference results of a plurality of object inference models 55 is generated by the parameter adjustment apparatus 1. "Object" indicates that the items thereafter relate to an inference task for which a weight set is generated, and "existing" indicates that the items thereafter relate to an inference task that is already present (that is, a weight set has been generated in the past) with respect to the object inference task.

### Model generation apparatus

The model generation apparatus 2 according to the present embodiment is a computer configured to generate an inference model for executing a task based on learning data. Specifically, the model generation apparatus 2 acquires learning data by using a sensor group S. Then, the model generation apparatus 2 generates an inference model that has acquired the capability of carrying out a related task related to an inference task using the acquired learning data. That is, the inference model is generated based on learning data obtained by the sensor group S such that the inference model is configured to carry out the related task.

The inference task may include any task of inferring a feature included in data obtained by a sensor. Inferring may be constituted by at least one of identifying (sorting) and regressing. Regressing may include specifying a range in data, such as a bounding box. Inferring may include estimating a future event. In accordance therewith, the feature may be related to an element that appears in the future. The details of an inference task may be determined as appropriate depending on an application case. As a specific application case, the inference task may be a task to infer the quality of products, inferring an event related to weather or an event influenced by weather, inferring an event related to a flow of people or an event that influences a flow of people, or inferring an event related to the state of a person, for example.

The objective of an inference task is specified in relation with at least one of inputs (object data), processing details, and outputs (inference details). For example, in the case of the aforementioned visual inspection, when the observation conditions differ between two inference tasks, the objectives of the two inference tasks may be treated to be different considering that their inputs differ. As another example, when at least one of the product to be inspected and the defect to be detected differs between two inference tasks, the objectives of the two inference tasks may be treated to be different considering that at least one of the processing details and the inference details differ.

In contrast, the related task is a task related to an inference task. In the present embodiment, the inference task is solved by integrating the inference results of a plurality of inference models. Therefore, the related task may include any task related to the inference task as long as the answer of the inference task can be derived by integrating the inference results. In the aforementioned case where a plurality of inference results are integrated in order to improve the inference accuracy in an operation environment, the details of the related task may be the same as those of the inference task. For example, when the inference task is to estimate the quality of products (that is, inspecting products), the related task may also be to estimate the quality of products. Also, in a case where a plurality of inference results are integrated in order to solve a higher-order inference task, the related task may be to infer a lower-order feature than the inference task. "Higher-order" inference corresponds to inferring more complex or abstract features from the inference results of two or more inference models or the information used to carry out the inference. For example, when the inference task is a task for comprehensively determining the quality of products, the related task may be a task to perform inference regarding defects based on observation data obtained by a specific sensor group. Also, when the data to be obtained is image data, and the inference task is a task to perform inference regarding defects, the related task may be a task to extract feature amounts of images related to defects, such as edges, for example.

There is no particular limitation to the configuration of the inference model, as long as the inference result regarding the task can be derived, and the configuration may be selected as appropriate depending on the embodiment. The inference model may be constituted by a data table, a function expression, or a rule, for example. The function expression includes one or more computation parameters for executing a computation process of carrying out the task (that is, for deriving the inference result). This function expression may be constituted by a neural network, a regression model, a decision tree, or a support vector machine, for example. The method for generating the inference model may be selected as appropriate depending on the configuration of the inference model. When the inference model is constituted by a data table, a function expression, or the like, the inference model may be generated by any optimizing method such as statistical processing or machine learning. Also, when the inference model is constituted by rules or the like, the inference model may also be generated by manpower.

The sensor group S is constituted by one or more sensors. The sensor may be an image sensor (camera), an infrared sensor, a sound sensor (microphone), an ultrasonic sensor, an optical sensor, a pressure sensor, an atmospheric pressure sensor, or a temperature sensor, for example. The sensor may also be an input apparatus such as a keyboard or a touch panel, for example. Also, the sensor may be an environment sensor, a vital sensor, a medical examination apparatus, an in-vehicle sensor, or a home security sensor, for example. The environment sensor may be a barometer, a thermometer, a hygrometer, a sound pressure sensor, a sound sensor, an ultraviolet sensor, an illumination meter, a precipitation gauge, a gas sensor, for example. The vital sensor may be a blood-pressure gauge, a pulsimeter, a heart rate meter, an electrocardiographic monitor, an electromyograph, a clinical thermometer, an electro dermal activity sensor, a microwave sensor, an electroencephalograph, a magnetoencephalograph, an activity tracker, a glucometer, an ocular potentiometer, or an eye movement measuring instrument, for example. The medical examination apparatus may be a CT (computed tomography) apparatus, or an MRI (magnetic resonance imaging) apparatus, for example. The in-vehicle sensor may be an image sensor, a Lidar (light detection and ranging) sensor, a millimeter-wave radar, an ultrasonic sensor, or an acceleration sensor, for example. The home security sensor may be an image sensor, an infrared sensor, an activity (sound) sensor, a gas (e.g., CO2) sensor, a current sensor, or a smart meter (sensor for measuring a power usage amount of a home electric appliance, illumination, or the like), for example. The one or more sensors that constitute the sensor group S may be selected as appropriate depending on the task that the inference model is caused to learn.

In a scenario in which a plurality of existing inference models 50 for solving an existing inference task are prepared, the model generation apparatus 2 acquires existing learning data 40 using the sensor group S. Then, the model generation apparatus 2 generates existing inference models 50 configured to carry out an existing related task related to the existing inference task based on the acquired existing learning data 40.

In the present embodiment, a plurality of existing inference models 50 are generated for each different existing inference task. In the example in FIG. 1, a task A and a task B are examples of the existing inference task. A plurality of existing inference models 50a are generated associated with the task A, and a plurality of existing inference models 50b are generated associated with the task B. Also, the existing inference models 50 (50a/50b) are generated for carrying out existing related tasks related to the corresponding existing inference tasks (task A/ task B) based on sets of existing learning data 40 respectively obtained from a plurality of different sensor groups S. Although two or more existing inference models 50 may be generated from existing learning data 40 obtained by one sensor group S for one existing inference task, typically, one existing inference model 50 is generated.

Also, a sensor group S that is at least partially shared between a plurality of existing inference tasks is used to collect the existing learning data 40 to be used to generate an existing inference model 50. That is, a plurality of existing inference models 50 respectively used in a plurality of different existing inference tasks are generated from existing learning data 40 obtained by one sensor group S. Here, typically, in the same sensor group S, sets of existing learning data 40 are separately collected for respective existing inference tasks, and existing inference models 50 are separately generated for respective existing inference tasks. That is, in the example in FIG. 1, different sets of existing learning data obtained by the same sensor group S, which are associated with each other, are respectively used to generate an existing inference model 50a to be used to carry out the task A and an existing inference model 50b to be used to carry out the task B.

For example, the task A may be to perform inference regarding a first type of defect of products in a specific production line, and on the other hand, the task B may be to perform inference regarding a second type of defect of products in the specific production line. In this case, each existing related task of the task A may be to perform inference regarding the first type of defect of products in a production line that is different from the specific production line. Also, each existing related task of the task B may be to perform inference regarding the second type of defect of products in a production line that is different from the specific production line. In this case, existing inference models (50a, 50b) may be separately generated, between the tasks A and B, from respective sets of existing learning data 40 separately obtained by the same sensor group S.

However, the relationship of the existing inference models 50 between the existing inference tasks is not limited to this example. When the details of an existing related task are the same between one existing inference task and another existing inference task, an existing inference model used for the one existing inference task may be the same as an existing inference model used for the other existing inference task, the existing inference models being generated from existing learning data obtained by the same sensor group S. In the example in FIG. 1, an existing inference model 50a and an existing inference model 50b may be the same, the existing inference models corresponding to each other as a result of being generated based on existing learning data obtained by the same sensor group S. That is, one existing inference model 50 generated from existing learning data 40 obtained by one sensor group S may be used in common between different existing inference tasks. Alternatively, an existing inference model obtained by updating the existing inference model used in one existing inference task may be used in another existing inference task. When updating an existing inference model, at least a part of the existing learning data may be changed, modified, added, or deleted. That is, the existing learning data used to generate the existing inference models may be at least partially the same.

For example, the task A is for inspecting products in a first production line, in contrast, the task B may be for inspecting products in a second production line that is different from the first production line. In this case, sensor groups S may be arranged in another production line that is different from the first and second production lines, and the existing related task carried out by the existing inference models may be inspecting products in the other production line. In this case, existing inference models 50 generated from existing learning data 40 obtained by the same sensor groups S may be used in common between the task A and task B. That is, the existing inference models 50a and the existing inference model 50b that correspond to each other may be the same.

On the other hand, in a scenario of preparing a plurality of object inference models 55 for solving an object inference task, the model generation apparatus 2 acquires object learning data 45 by using sensor groups S. Then, the model generation apparatus 2 generates object inference models 55 configured to carry out object related tasks related to the object inference task based on the acquired object learning data 45.

In the present embodiment, a plurality of object inference models 55 are generated with respect to one object inference task. In the example in FIG. 1, a task Z is an example of an object inference task. The object inference models 55 are generated to carry out object related tasks related to the object inference task, based on sets of object learning data 45 obtained by a plurality of respective sensor groups S. The relationship between the object inference models 55 and the sensor groups S is similar to the relationship between the above-described existing inference models 50 and the sensor groups S. Also, the relationship between the object inference task and the existing inference tasks is similar to the relationship between different existing inference tasks. In accordance therewith, the relationship between the object inference models 55 and the existing inference models 50 is similar to the relationship between existing inference models 50 to be used for different existing inference tasks.

That is, at least partially shared sensor groups S are used to collect learning data (40, 45) to be used to generate the inference models (50, 55), between the object inference task and the existing inference tasks. Here, the inference models (50, 55) may be separately generated from learning data (40, 45) separately obtained by the same sensor groups S, between the object inference task and the existing inference tasks. Alternatively, inference models generated from learning data obtained by one sensor group S may be used in common between the existing inference tasks and the object inference task, as existing inference models 50 and an object inference model 55. In this case, the object learning data 45 may be the same as the existing learning data 40. That is, the existing inference models 50 and the object inference models 55 do not need to be individually generated. Alternatively, object inference models 55 obtained by updating the existing inference models 50 used in an existing inference task may be used in the object inference task. In this case, the object learning data 45 may be obtained by at least partially changing, modifying, adding, or deleting the existing learning data 40.

As a specific example of the existing inference tasks and the object inference task, the task A and task B are for performing inference regarding first and second types of defects of products in a specific production line, and in contrast, the task Z may be to perform inference regarding a third type of defect, which is different from the first and second types of defects, in the specific production line. As another specific example, the task A and task B are for inspecting products in a first production line and a second production line, respectively, and in contrast, the task Z may be for inspecting products in a third production line, which is different from the first and production lines.

Note that, the range of the inference models (50, 55) to be generated by one model generation apparatus 2 is not limited in particular, and may be determined as appropriate depending on the embodiment. For example, the model generation apparatus 2 may be prepared for each of inference models (50, 55) to be generated. Also, the model generation apparatus 2 may be prepared for each sensor group S, for example. In this case, the model generation apparatus 2 may generate corresponding existing inference models 50 and an object inference model 55 based on learning data (40, 45) obtained by the corresponding sensor group S. Also, one model generation apparatus 2 may generate all inference models (50, 55), for example.

### Parameter adjustment apparatus

The parameter adjustment apparatus 1 according to the present embodiment is a computer configured to generate weights of inference models such that an inference task is appropriately carried out (that is, to generate a weight set). An inference task being appropriately carried out corresponds to the solution derived by integrating the inference results of the inference models (result of carrying out the related tasks) being suitable as the solution of the inference task. In the present embodiment, the parameter adjustment apparatus 1 determines the weights of the object inference models 55.

Specifically, the parameter adjustment apparatus 1 acquires existing task information 121 regarding a plurality of existing inference tasks. The existing task information 121 indicates a plurality of existing weight sets 60 respectively constituted by a plurality of existing weights that are determined in advance to be suitable for the existing inference tasks. The existing weight sets 60 may be manually generated. Alternatively, the existing weight sets 60 may be generated using any optimizing method such as machine learning or another optimizing method. In this case, verification data obtained in an environment in which the existing inference task is to be carried out may be used in the optimizing method. The verification data may be similarly configured as the existing learning data 40. Alternatively, the existing weight sets 60 may also be generated by the parameter adjustment apparatus 1, similarly to the object weight set 65. In this case, the object existing inference task may be similarly handled as the object inference task, and other existing inference tasks may be handled as the existing inference tasks as is. Accordingly, the object existing weight set 60 may be generated with a method similar to that of the object weight set 65 described below.

Next, the parameter adjustment apparatus 1 calculates degrees of association 123 between the object inference task and the existing inference tasks according to the similarity in the objective between the object inference task and the existing inference tasks. Then, the parameter adjustment apparatus 1 determines a plurality of object weights that constitute the object weight set 65 from the plurality of existing weights of the existing weight sets 60 indicated by the existing task information 121, according to the calculated degrees of association 123. In the example in FIG. 1, the parameter adjustment apparatus 1 determines a plurality of object weights that constitutes the object weight set 65 to be used in the task Z, from a plurality of existing weights that constitute the plurality of existing weight sets 60 including the existing weight sets (60a, 60b) of the tasks A and B. The determined object weights of the object weight set 65 each specify the priority of the inference result of the corresponding object inference model 55, when integrating the inference results of the object inference models 55.

### (Inference apparatus)

The inference apparatus 3 according to the present embodiment is a computer configured to carry out an inference task using the generated inference models. In the present embodiment, in particular, the inference apparatus 3 carries out an object inference task using the plurality of generated object inference models 55 and the object weight set 65 generated by the parameter adjustment apparatus 1.

Specifically, the inference apparatus 3 acquires object data. Next, the inference apparatus 3 solves an object inference task for the acquired object data, using the plurality of object inference models 55 and the plurality of object weights of the object weight set 65 generated by the parameter adjustment apparatus 1. Then, the inference apparatus 3 outputs information regarding the result obtained by solving the object inference task.

Note that the existing inference tasks may also be carried out, in a similar procedure, using the existing inference models 50 and the existing weight set 60 by any computer including the inference apparatus 3. Also, the inference models (50, 55) may also be separately used to carry out a task, in any computer including the model generation apparatus 2 and the inference apparatus 3.

### (Summary)

As described above, in the present embodiment, based on the aforementioned technological aspect that the weights to be set are similar between the inference tasks whose objectives are similar, as a result of utilizing the past record of existing weight sets 60 (existing task information 121) that are generated for the plurality of respective existing inference tasks, at least some of the operations for generating the object weight set 65 to be used in the object inference task can be automated. Therefore, according to the present embodiment, in a situation in which a plurality of different inference tasks are set, the costs incurred when introducing a plurality of inference models in order to solve an object inference task can be reduced.

Note that, in the example in FIG. 1, the parameter adjustment apparatus 1, the model generation apparatus 2, and the inference apparatus 3 are connected to each other via a network. The type of the network may be selected as appropriate from the Internet, a wireless communication network, a mobile communication network, a telephone network, a dedicated network, and the like. Note that the method for exchanging data between the parameter adjustment apparatus 1, the model generation apparatus 2, and the inference apparatus 3 is not limited to this example, and may be selected as appropriate depending on the embodiment. For example, data may be exchanged in one of the combinations between the parameter adjustment apparatus 1, the model generation apparatus 2, and the inference apparatus 3 using a storage medium, for example.

Also, in the example in FIG. 1, the parameter adjustment apparatus 1, the model generation apparatus 2, and the inference apparatus 3 are constituted by separate computers. However, the configuration of the inference system 100 according to the present embodiment is not limited to this example, and may be determined as appropriate depending on the embodiment. For example, at least one of the combinations between the parameter adjustment apparatus 1, the model generation apparatus 2, and the inference apparatus 3 may be constituted by one computer. Also, at least one of the parameter adjustment apparatus 1, the model generation apparatus 2, and the inference apparatus 3 may also be constituted by a plurality of computers, for example.

### 2. Exemplary configuration

### [Hardware configuration]

### <Parameter adjustment apparatus>

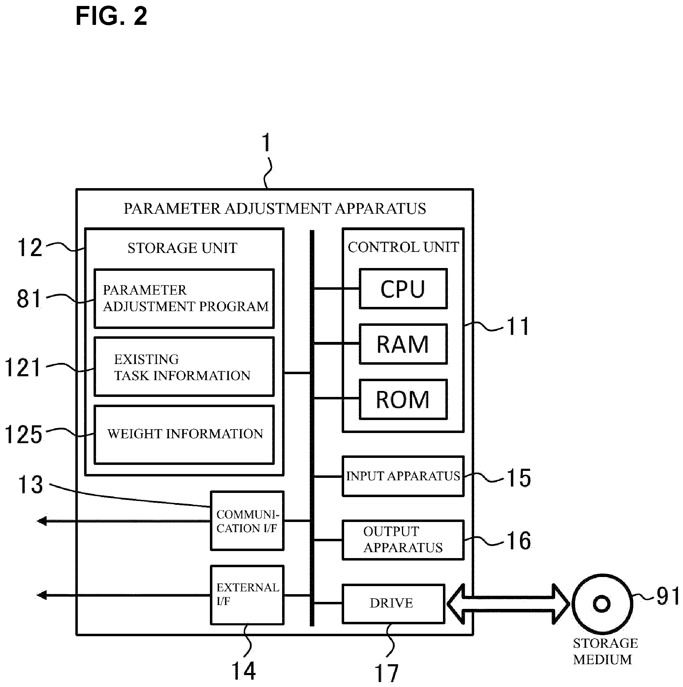

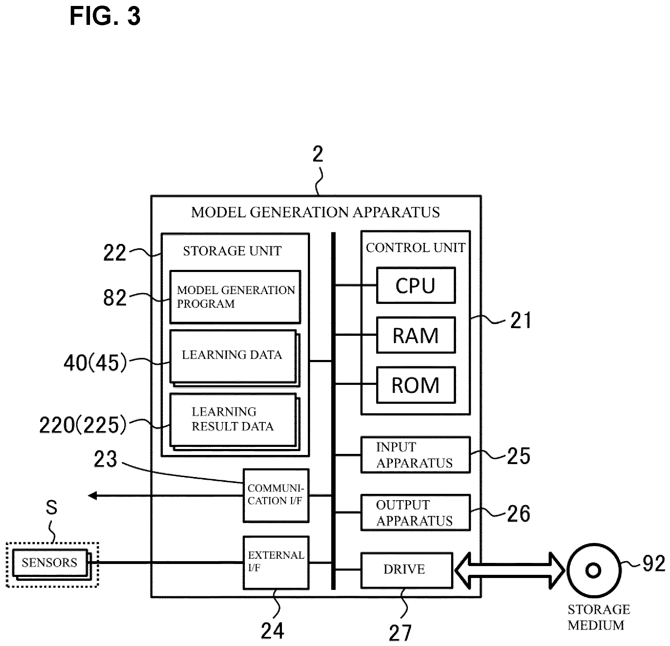

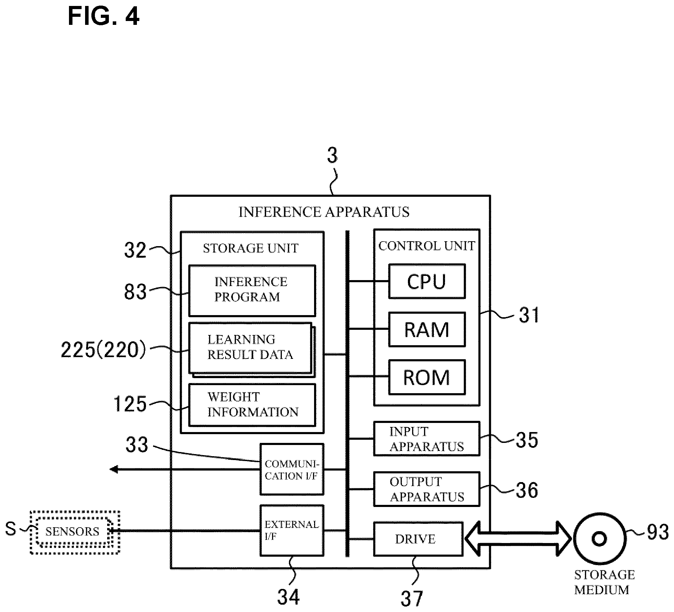

FIG. 2 schematically illustrates an example of a hardware configuration of the parameter adjustment apparatus 1 according to the present embodiment. As shown in FIG. 2, the parameter adjustment apparatus 1 according to the present embodiment is a computer in which a control unit 11, a storage unit 12, a communication interface 13, an external interface 14, an input apparatus 15, an output apparatus 16, and a drive 17 are electrically connected. Note that, in FIG. 2, the communication interface and the external interface are denoted as "communication I/F" and "external I/F". The similar notation is used in later-described FIGS. 3 and 4.

The control unit 11 includes a CPU (central processing unit), which is a hardware processor, a RAM (random access memory), a ROM (read only memory), and the like, and is configured to execute information processes based on a program and various types of data. The CPU is an example of a processor resource. The storage unit 12 is an example of a memory resource, and is constituted by a hard disk drive, a solid-state drive, or the like. In the present embodiment, the storage unit 12 stores various types of information such as a parameter adjustment program 81, existing task information 121, and weight information 125.

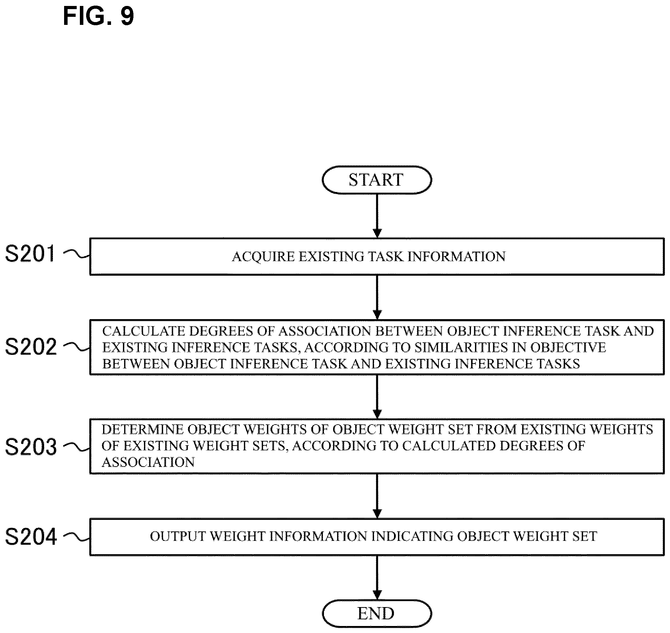

The parameter adjustment program 81 is a program for the parameter adjustment apparatus 1 to execute a later-described information process (FIG. 9) relating to the generation of the object weight set 65. The parameter adjustment program 81 includes a series of commands of the information process. The existing task information 121 indicates an existing weight set 60 constituted by a plurality of existing weights for each existing inference task. The weight information 125 indicates a generated object weight set 65. In the present embodiment, the weight information 125 is generated as a result of executing the parameter adjustment program 81.

The communication interface 13 is a wired LAN (local area network) module, a wireless LAN module, or the like, and is an interface for performing wired or wireless communication via a network. The parameter adjustment apparatus 1 may execute data communication with another information processing apparatus via the network using the communication interface 13. The external interface 14 is a USB (universal serial bus) port, a dedicated port, or the like, and is an interface for connecting to an external apparatus. The type and the number of external interfaces 14 may be selected as appropriate depending on the type and the number of external apparatuses to be connected, for example.

The input apparatus 15 is an apparatus for performing input, such as a mouse, a keyboard, or a microphone. Also, the output apparatus 16 is an apparatus for performing output, such as a display, a speaker, or the like. An operator such as a user can operate the parameter adjustment apparatus 1 by using the input apparatus 15 and the output apparatus 16.

The drive 17 is a CD drive, a DVD drive, or the like, and is a drive apparatus for reading various types of information such as a program stored in a storage medium 91. The storage medium 91 is a medium that stores information such as programs via an electrical, magnetic, optical, mechanical or chemical effect such that the stored information such as the programs can be read by an apparatus or a machine such as a computer. At least one of the parameter adjustment program 81 and the existing task information 121 may be stored in the storage medium 91. The parameter adjustment apparatus 1 may acquire at least one of the parameter adjustment program 81 and the existing task information 121 from this storage medium 91. Note that, in FIG. 2, a disk-type storage medium such as a CD or a DVD is illustrated as an example of the storage medium 91. However, the type of the storage medium 91 is not limited to the disk type, and may also be a medium other than a disk type medium. Storage media other than a disk type medium include a semiconductor memory such as a flash memory, for example. The type of the drive 17 may be selected as appropriate depending on the type of the storage medium 91.

Note that, regarding the specific hardware configuration of the parameter adjustment apparatus 1, constituent elements can be omitted, replaced, and added as appropriate depending on the embodiment. For example, the processor resource may also include a plurality of hardware processors. The hardware processors may also be constituted by a microprocessor, an FPGA (field-programmable gate array), a DSP (digital signal processor), and the like. The storage unit 12 may be constituted by the RAM and ROM included in the control unit 11. At least one of the communication interface 13, the external interface 14, the input apparatus 15, the output apparatus 16, and the drive 17 may be omitted. The parameter adjustment apparatus 1 may also be constituted by a plurality of computers. In this case, the hardware configuration of the computers may be the same, or may not be the same. Also, the parameter adjustment apparatus 1 may also be a general-purpose server apparatus, a general-purpose PC (personal computer), a mobile terminal such as a tablet terminal or a smartphone, or the like, instead of an information processing apparatus that is specifically designed for the service to be provided.

### <Model generation apparatus>

FIG. 3 schematically illustrates an example of a hardware configuration of the model generation apparatus 2 according to the present embodiment. As shown in FIG. 3, the model generation apparatus 2 according to the present embodiment is a computer in which a control unit 21, a storage unit 22, a communication interface 23, an external interface 24, an input apparatus 25, an output apparatus 26, and a drive 27 are electrically connected.

The units from the control unit 21 to the drive 27 of the model generation apparatus 2 and a storage medium 92 may be configured similarly to the units from the control unit 11 to the drive 17 of the parameter adjustment apparatus 1 and the storage medium 91 that are described above. The control unit 21 includes a CPU, which is a hardware processor, a RAM, a ROM, and the like, and is configured to execute various information processes based on a program and data. The storage unit 22 is constituted by a hard disk drive, a solid-state drive, or the like. The storage unit 22 stores various types of information such as a model generation program 82, learning data (40, 45), and learning result data (220, 225).

The model generation program 82 is a program for the model generation apparatus 2 to execute a later-described information process (FIG. 9) relating to generation of the inference models (50, 55). The model generation program 82 includes a series of commands of this information process. The existing learning data 40 is used to generate the existing inference models 50. The object learning data 45 is used to generate the object inference models 55. The existing learning result data 220 indicates information regarding the generated existing inference models 50. The object learning result data 225 indicates information regarding the generated object inference models 55. In the present embodiment, the learning result data (220, 225) is generated as a result of executing the model generation program 82.

At least one of the model generation program 82 and the learning data (40, 45) may be stored in the storage medium 92. In correspondence therewith, the model generation apparatus 2 may acquire at least one of the model generation program 82 and the learning data (40, 45) from the storage medium 92. Alternatively, the model generation apparatus 2 may be directly connected to a sensor group S in order to collect the learning data (40, 45). In this case, the model generation apparatus 2 may be connected to the sensor groups S via one of the communication interface 23 and the external interface 24.

Note that, in the example in FIG. 3, it is envisioned that the model generation apparatus 2 generates both of the existing inference models 50 and the object inference models 55. However, as described above, the range of the inference model (50, 55) to be generated by one model generation apparatus 2 is not limited to this example. The generation of one of the existing inference models 50 and the object inference models 55 may be omitted. In this case, the combination corresponding to the omitted inference models may be omitted, out of the combination of the existing learning data 40 and the existing learning result data 220 and the combination of the object learning data 45 and the object learning result data 225.

Also, regarding the specific hardware configuration of the model generation apparatus 2, constituent elements can also be omitted, replaced, and added as appropriate depending on the embodiment. For example, the processor resource of the model generation apparatus 2 may include a plurality of hardware processors. The hardware processors may be constituted by a microprocessor, an FPGA, a DSP, and the like. The storage unit 22 may be constituted by the RAM and ROM included in the control unit 21. At least one of the communication interface 23, the external interface 24, the input apparatus 25, the output apparatus 26, and the drive 27 may be omitted. The model generation apparatus 2 may also be constituted by a plurality of computers. In this case, the hardware configuration of the computers may be the same, or may not be the same. Also, the model generation apparatus 2 may also be a general-purpose server apparatus, a general-purpose PC, a mobile terminal such as a tablet terminal or a smartphone, or the like, instead of an information processing apparatus that is specifically designed for the service to be provided.

### <Inference apparatus>

FIG. 4 schematically illustrates an example of a hardware configuration of the inference apparatus 3 according to the present embodiment. As shown in FIG. 4, the inference apparatus 3 according to the present embodiment is a computer in which a control unit 31, a storage unit 32, a communication interface 33, an external interface 34, an input apparatus 35, an output apparatus 36, and a drive 37 are electrically connected.

The units from the control unit 31 to the drive 37 of the model generation apparatus 2 and a storage medium 93 may be configured similarly to the units from the control unit 11 to the drive 17 of the parameter adjustment apparatus 1 and the storage medium 91 that are described above. The control unit 31 includes a CPU, which is a hardware processor, a RAM, a ROM, and the like, and is configured to execute various information processes based on a program and data. The storage unit 32 is constituted by a hard disk drive, a solid-state drive, or the like. The storage unit 32 stores various types of information such as an inference program 83, object learning result data 225, and weight information 125.

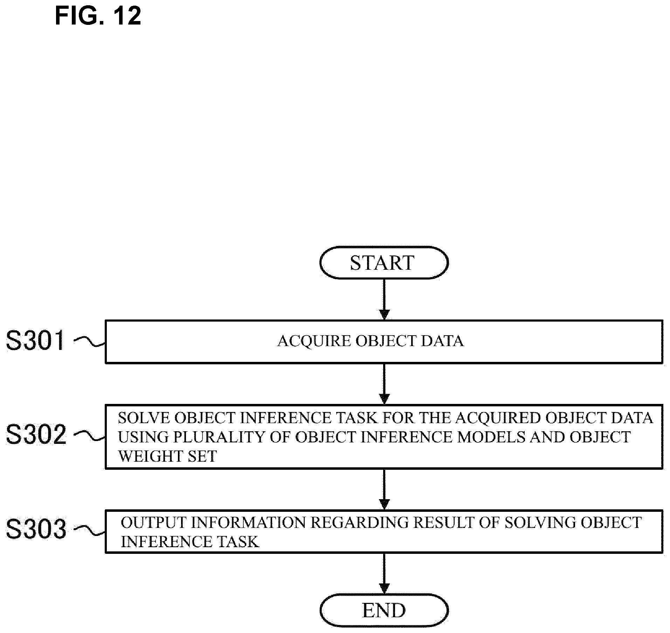

The inference program 83 is a program for the inference apparatus 3 to execute a later-described information process (FIG. 12) in which a task is carried out using an inference model. The inference program 83 includes a series of commands of this information process. In the present embodiment, a configuration is adopted in which the information process is executed in which an object inference task is carried out using a plurality of object inference models 55 and an object weight set 65. Note that the inference apparatus 3 may be configured to carry out an existing inference task using a plurality of existing inference models 50 and an existing weight set 60. In this case, the inference program 83 may further include a series of commands of information process for carrying out the existing inference task. Also, the storage unit 32 may further store the existing learning result data 220.

At least one of the inference program 83, the learning result data (220, 225), and the weight information 125 may be stored in the storage medium 93. In correspondence therewith, the inference apparatus 3 may acquire at least one of the inference program 83, the learning result data (220, 225), and the weight information 125 from the storage medium 93. Also, the inference apparatus 3 may be directly connected to the sensor groups S in order to collect the object data. In this case, the inference apparatus 3 may be connected to the sensor groups S via one of the communication interface 33 and the external interface 34.

Note that, regarding the specific hardware configuration of the inference apparatus 3, constituent elements can also be omitted, replaced, and added as appropriate depending on the embodiment. For example, the processor resource of the inference apparatus 3 may include a plurality of hardware processors. The hardware processors may be constituted by a microprocessor, an FPGA, a DSP, and the like. The storage unit 32 may be constituted by the RAM and ROM included in the control unit 31. At least one of the communication interface 33, the external interface 34, the input apparatus 35, the output apparatus 36, and the drive 37 may be omitted. The inference apparatus 3 may also be constituted by a plurality of computers. In this case, the hardware configuration of the computers may be the same, or may not be the same. Also, the inference apparatus 3 may also be a general-purpose server apparatus, a general-purpose PC, a mobile terminal such as a tablet terminal or a smartphone, or the like, instead of an information processing apparatus that is specifically designed for the service to be provided.

### [Software configuration]

### <Parameter adjustment apparatus>

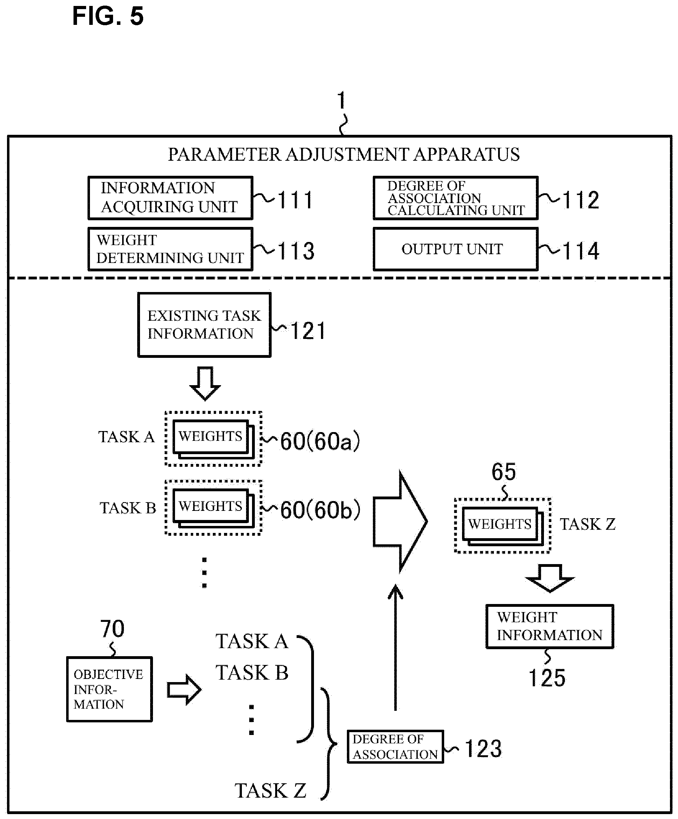

FIG. 5 schematically illustrates an example of a software configuration of the parameter adjustment apparatus 1 according to the present embodiment. The control unit 11 of the parameter adjustment apparatus 11 deploys the parameter adjustment program 81 stored in the storage unit 12 to the RAM. Then, the control unit 11 controls the constituent elements by the CPU interpreting and executing instructions included in the parameter adjustment program 81 deployed to the RAM. With this, as shown in FIG. 5, the parameter adjustment apparatus 1 according to the present embodiment operates as a computer including an information acquiring unit 111, a degree of association calculating unit 112, a weight determining unit 113, and an output unit 114, as software modules. That is, in the present embodiment, the software modules of the parameter adjustment apparatus 1 are realized by the control unit 11 (CPU).

The information acquiring unit 111 acquires existing task information 121 regarding a plurality of existing inference tasks. The existing task information 121 indicates a plurality of existing weight sets 60 that are each constituted by a plurality of existing weights that are determined in advance such that the corresponding existing inference task can be appropriately carried out. The degree of association calculating unit 112 calculates the degrees of association 123 between an object inference task and existing inference tasks according to the similarity in objective between the object inference task and the existing inference tasks. The information indicating the objectives of the existing inference tasks may be given as objective information 70. In the example in FIG. 5, the existing task information 121 indicates a plurality of existing weight sets 60 including the existing weight sets (60a, 60b) of the tasks A and B. The degree of association calculating unit 112 calculates the degrees of association 123 between a task Z and the existing inference tasks (including tasks A and B) according to the similarity in objective between the task Z and the existing inference tasks.

The weight determining unit 113 determines, according to the calculated degrees of association 123, a plurality of object weights that constitute an object weight set 65 from the plurality of existing weights that constitute the existing weight sets 60 indicated by the existing task information 121. With this, the weight determining unit 113 generates the object weight set 65 to be used in the object inference task (task Z, in the example in FIG. 5). The determined object weights are used to set the priorities of the inference results of the respective object inference models 55, when integrating the inference results of the plurality of object inference model 55. The output unit 114 generates weight information 125 indicating the object weight set 65 constituted by the plurality of determined object weights. Then, the output unit 114 outputs the generated weight information 125 to a predetermined output destination.

### <Model generation apparatus>

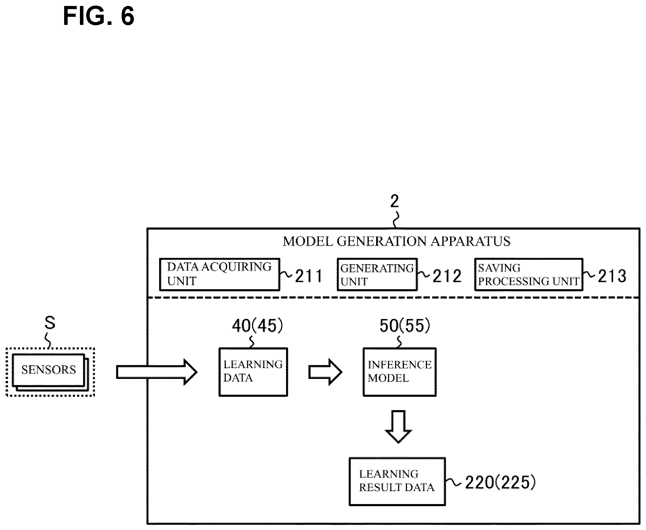

FIG. 6 schematically illustrates an example of a software configuration of the model generation apparatus 2 according to the present embodiment. The control unit 21 of the model generation apparatus 2 deploys the model generation program 82 stored in the storage unit 22 to the RAM. Then, the control unit 21 controls the constituent elements by the CPU interpreting and executing instructions included in the model generation program 82 deployed to the RAM. With this, as shown in FIG. 6, the model generation apparatus 2 according to the present embodiment operates as a computer including a data acquiring unit 211, a generating unit 212, and a saving processing unit 213, as software modules. That is, in the present embodiment, the software modules of the model generation apparatus 2 are realized by the control unit 21 (CPU), similarly to the parameter adjustment apparatus 1 described above.

The data acquiring unit 211 acquires learning data using the sensor groups S. The generating unit 212 generates an inference model configured to carry out a related task using the acquired learning data. The saving processing unit 213 generates learning result data regarding the generated inference model. Also, the saving processing unit 213 saves the generated learning result data in a predetermined storage region.

In a scenario in which an existing inference model 50 is generated, the data acquiring unit 211 acquires existing learning data 40 using the sensor groups S. The generating unit 212 generates existing inference models 50 configured to carry out existing related tasks based on the acquired existing learning data 40. The saving processing unit 213 generates existing learning result data 220 regarding the generated existing inference models 50, and saves the generated existing learning result data 220 in a predetermined storage region.

On the other hand, in a scenario in which an object inference model 55 is generated, the data acquiring unit 211 acquires object learning data 45 using the sensor groups S. The generating unit 212 generates object inference models 55 configured to carry out object related tasks based on the acquired object learning data 45. The saving processing unit 213 generates object learning result data 225 regarding the generated object inference models 55, and saves the generated object learning result data 225 in a predetermined storage region.

### <Inference apparatus>

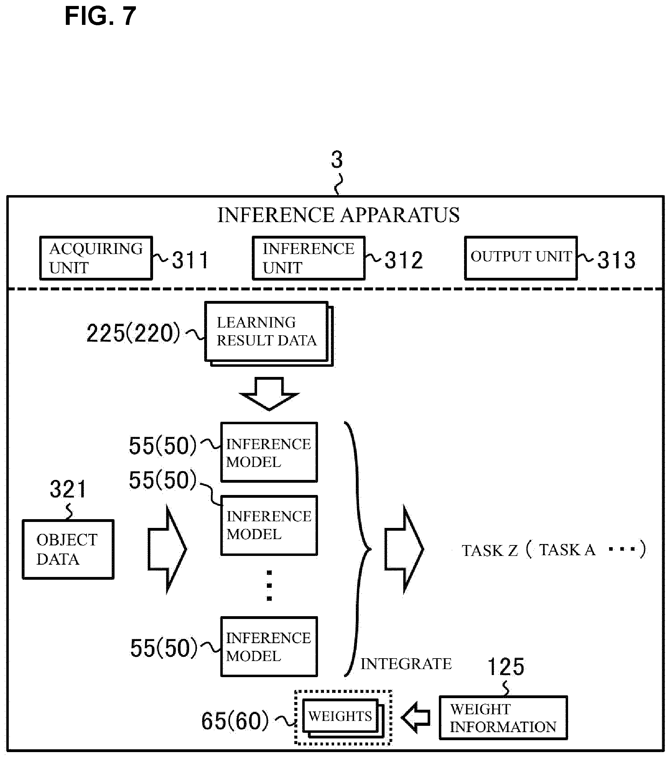

FIG. 7 schematically illustrates an example of a software configuration of the inference apparatus 3 according to the present embodiment. The control unit 31 of the inference apparatus 3 deploys the inference program 83 stored in the storage unit 32 to the RAM. Then, the control unit 31 controls the constituent elements by the CPU interpreting and executing instructions included in the inference program 83 deployed to the RAM. With this, as shown in FIG. 7, the inference apparatus 3 according to the present embodiment operates as a computer including an acquiring unit 311, an inference unit 312, and an output unit 313, as software modules. That is, in the present embodiment, the software modules of the inference apparatus 3 are realized by the control unit 31 (CPU), similarly to the parameter adjustment apparatus 1 described above.

The acquiring unit 311 acquires object data 321. The inference unit 312 includes a plurality of object inference models 55 by retaining the object learning result data 225 of the object inference models 55. Also, the inference unit 312 includes an object weight set 65 that is constituted by a plurality of object weights and is generated by the parameter adjustment apparatus 1, by retaining the weight information 125. The inference unit 312 solves an object inference task (task Z, in the example in FIG. 7) for the acquired object data 321 using the plurality of object inference models 55 and object weight sets 65. Specifically, the inference unit 312 solves the object inference task for the acquired object data 321 by integrating the inference results of the object inference models 55, according to the object weights. The output unit 313 outputs information regarding the result of solving the object inference task.

Note that when the inference apparatus 3 is configured to further carry out existing inference tasks, the inference unit 312 includes a plurality of corresponding existing inference models 50 by retaining existing learning result data 220 of the existing inference models 50 corresponding to object existing inference tasks. The corresponding existing weight sets 60 (plurality of existing weights) may be acquired as appropriate. The inference unit 312 solves the object existing inference tasks (task A and the like, in the example in FIG. 7) for the acquired object data using the plurality of corresponding existing inference models 50 and existing weight sets 60. The output unit 313 output information regarding the results of solving the object existing inference tasks.

### <Other considerations>

The software modules of the parameter adjustment apparatus 1, the model generation apparatus 2, and the inference apparatus 3 will be described in detail in a later-described exemplary operation. Note that, in the present embodiment, an example is described in which the software modules of the parameter adjustment apparatus 1, the model generation apparatus 2, and the inference apparatus 3 are realized by a general-purpose CPU. However, some of or all of the software modules described above may be realized by at least one dedicated processor. For example, when the data to be processed includes image data, some of or all of the software modules described above may be realized by a graphics processing unit. Also, regarding the software configuration of the parameter adjustment apparatus 1, the model generation apparatus 2, and the inference apparatus 3, software modules may also be omitted, replaced, and added as appropriate depending on the embodiment.

### 3. Exemplary action

### [Model generation apparatus]

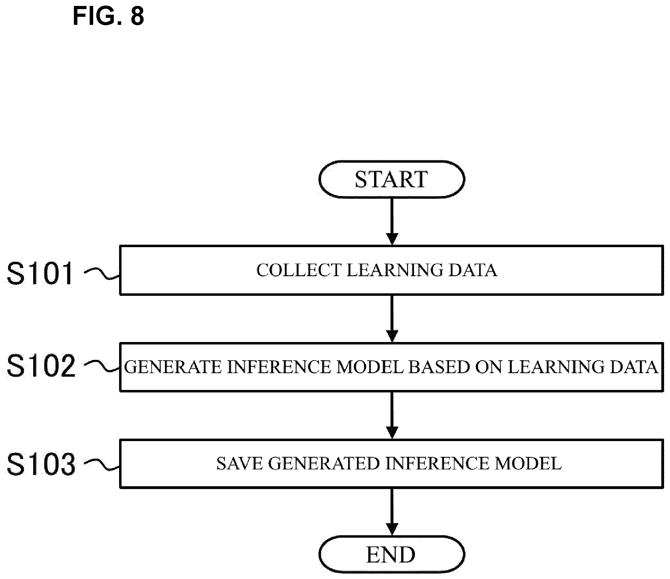

FIG. 8 is a flowchart illustrating an example of a procedure of the model generation apparatus 2 according to the present embodiment. The procedure to be described in the following is an example of the model generation method. Note that the procedure to be described in the following is merely an example, and each step may be modified to the extent possible. Moreover, in the procedure described below, steps may also be omitted, replaced, or added as appropriate depending on the embodiment.

### (Step S101)

In step S101, the control unit 21 operates as the data acquiring unit 211, and acquires learning data using the sensor groups S. In a scenario in which existing inference models 50 are generated, the control unit 21 acquires existing learning data 40. In a scenario in which object inference models 55 are generated, the control unit 21 acquires object learning data 45.

The configuration of the learning data (40, 45) may be determined as appropriate depending on the embodiment, according to the method of generating the inference models (50, 55) or the like. For example, when an inference model (50, 55) is generated by statistical processing, manpower, or the like, the learning data (40, 45) may include a plurality of sets of observation data (that is, training data) obtained by the sensor groups S observing the object of an inference task. The training data may be image data, sound data, numerical data, text data, or sensing data of another type, for example. Similarly, when the inference model (50, 55) is generated by unsupervised learning of machine learning, the learning data (40, 45) may include a plurality of sets of training data. For another example, when the inference model (50, 55) is generated by supervised learning of machine learning, the learning data (40, 45) may include a plurality of learning data sets that are each constituted by a combination of training data (input data) and a correct answer label (teaching signal). The correct answer label indicates a correct answer of a related task for the training data. For another example, when the inference model (50, 55) is generated by reinforcement learning of machine learning, the learning data (40, 45) may include state transition data constituted by a combination of a state transition observed by a sensor group S and an immediate reward obtained by the transition, in some cases. Note that the aforementioned configurations of the learning data (40, 45) generated by the generation methods are merely examples. Regarding the specific configurations of the learning data (40, 45) generated by the generation methods, constituent elements can be omitted, replaced, and added as appropriate depending on the embodiment. The learning data (40, 45) may be automatically generated by the operation of a computer, or may also be manually generated, in which case an operator's operation is at least partially included.

Also, the path through which the learning data (40, 45) is acquired may be selected as appropriate depending on the embodiment. When the model generation apparatus 2 is directly connected to the sensor groups S, the control unit 21 may directly acquire learning data from the sensor groups S. On the other hand, when the sensor groups S are connected to another computer, the control unit 21 may also acquire the learning data (40, 45) collected by the other computer via a network, a storage medium, or the like. Upon acquiring the learning data, the control unit 21 advances the processing to the next step S102.

### (Step S102)

In step S102, the control unit 21 operates as the generating unit 212, and generates inference models (50, 55) based on the acquired learning data (40, 45).

The configuration and the generation method of the inference models (50, 55) are not limited in particular, and may be selected as appropriate depending on the embodiment. The inference models (50, 55) may be constituted by a data table, a function expression, a rule, or the like. The inference models (50, 55) may be generated by any optimizing method such as statistical processing or machine learning. Alternatively, the inference models (50, 55) may be generated by manpower. When machine learning is adopted, the inference models (50, 55) may be generated by using at least one of supervised learning, unsupervised learning, and reinforcement learning. The unsupervised learning may include self-supervised learning and adversarial learning. A value-based method, a policy-based method, or both methods may be adopted as the reinforcement learning.

For example, a case is envisioned in which supervised learning is adopted as the generation method, and the inference models (50, 55) are constituted by neural networks. The number of layers included in the neural network, the types of the layers, the numbers of neurons (nodes) included in the respective layers may be determined as appropriate. In this case, the control unit 21 trains a neural network to acquire the capability of outputting, when the training data is input, an output value that matches the correct answer label, with respect to each learning data set included in the learning data (40, 45). In this training process, batch gradient descent, stochastic gradient descent, mini-batch gradient descent, or the like may be used. Also, back propagation may be used in the process for adjusting the computation parameters included in the neural network in the training process.

As an example of the training process, the control unit 21 inputs training data to the input layer of the neural network, and executes forward propagation computation processes of the neural network. The forward propagation computation process is to determine, sequentially from the input side, how each of the neurons included in the layers fires. With this, the control unit 21 acquires, from the output layer, an output value corresponding to the result of carrying out the related task for the training data. The control unit 21 calculates, with respect to each learning data set, an error between the output value obtained from the output layer and the correct answer label. The control unit 21 calculates errors in the values of the computation parameters included in the neural network by back-propagating the gradients of the calculated errors from the output layer toward the input layer, using an error back propagation method. Then, the control unit 21 updates the values of the computation parameters based on the calculated errors. The control unit 21 adjusts the values of the computation parameters included in the neural network such that the sum of calculated errors decreases, by the series of update processes. For example, the control unit 21 may repeat the series of update processes until a predetermined condition such as the sum of the calculated errors being a threshold value or less or executing a specified number of times is satisfied. With this, the control unit 21 can generate the inference models (50, 55) that have acquired the capability of outputting, when the training data is input, an output value that matches the correct answer label, with respect to each learning data set included in the learning data (40, 45) (that is, the capability of appropriately carrying out the related task for the learning data (40, 45)).

Upon generating the inference models (50, 55), the control unit 21 advances the processing to the next step S103.

### (step S103)

In step S103, the control unit 21 operates as the saving processing unit 213, and generates information regarding the inference models (50, 55) generated in step S102 as learning result data (220, 225). For example, when the inference models (50, 55) are constituted by function expressions (neural network, in particular), the control unit 21 generates information indicating the structures and the values of the computation parameters of the inference models (50, 55) as the learning result data (220, 225). When the structure of an inference model (50, 55) is shared between systems, the information regarding the inference models (50, 55) may be omitted. Also, the control unit 21 saves the generated learning result data (220, 225) in a predetermined storage region.

The predetermined storage area may be the RAM in the control unit 21, the storage unit 22, an external storage apparatus, or a storage medium, or a combination of these, for example. The storage media may be a CD, a DVD, or the like, and the control unit 21 may store the sets of learning result data (220, 225) in the storage media via the drive 27. The external storage apparatus may be a data server such as a NAS (network attached storage). In this case, the control unit 21 may also store the sets of learning result data (220, 225) in the data server via a network using the communication interface 23. Moreover, the external storage apparatus may also be an external storage apparatus connected to the model generation apparatus 2 via the external interface 24, for example. The type of the storage region may be selected as appropriate for each set of learning result data (220, 225). Upon completing the saving of the sets of learning result data (220, 225), the control unit 21 ends the procedure regarding this exemplary operation. As a result of the one or more model generation apparatuses 2 executing the processes in steps S101 to S103 described above for the learning data (40, 45) obtained by the plurality of different sensor groups S, a plurality of inference models (50, 55) corresponding to the respective sensor groups S can be generated.

Note that the generated object learning result data 225 may be provided to the inference apparatus 3 at any timing. For example, the control unit 21 may transfer the object learning result data 225 to the inference apparatus 3 as the process in step S103 or in a process different from the process in step S103. The inference apparatus 3 may acquire the object learning result data 225 by receiving this transfer. Also, the inference apparatus 3 may also acquire the object learning result data 225 by accessing the model generation apparatus 2 or a data server via a network using the communication interface 33, for example. Also, the inference apparatus 3 may acquire the object learning result data 225 via a storage medium 93, for example. Also, the object learning result data 225 may be incorporated in the inference apparatus 3 in advance, for example.

Furthermore, the control unit 21 may update or newly generate the object learning result data 225 by regularly or irregularly repeating the processes in steps S101 to S103 described above. During this repetition, at least a portion of the object learning data 45 may be changed, modified, added, deleted, or the like, as appropriate. Also, the control unit 21 may update the object learning result data 225 retained by the inference apparatus 3 by providing the updated or newly generated object learning result data 225 to the inference apparatus 3 using any method.

When the inference apparatus 3 is further configured to carry out an object existing inference task, the object existing learning result data 220 may be similarly provided to the inference apparatus 3 at any timing. The control unit 21 may update or newly generate the existing learning result data 220 by repeating the processes in steps S101 to S103 described above. Also, the control unit 21 may update the existing learning result data 220 retained by the inference apparatus 3 by providing the updated or newly generated existing learning result data 220 to the inference apparatus 3 using any method. The same applies to the case where the existing inference task is executed by another computer.

### [Parameter adjustment apparatus]

FIG. 9 is a flowchart illustrating an example of a procedure of the parameter adjustment apparatus 1 according to the present embodiment. The procedure described below is an example of the parameter adjustment method. Note that the procedures described below are merely examples, and each step may be changed to the extent possible. Moreover, in the procedures described below, steps may also be omitted, replaced, or added as appropriate depending on the embodiment.

### (Step S201)

In step S201, the control unit 11 operates as the information acquiring unit 111, and acquires existing task information 121 regarding a plurality of existing inference tasks. The existing task information 121 indicates a plurality of existing weight sets 60 that are generated such that the respective existing inference tasks are appropriately carried out.

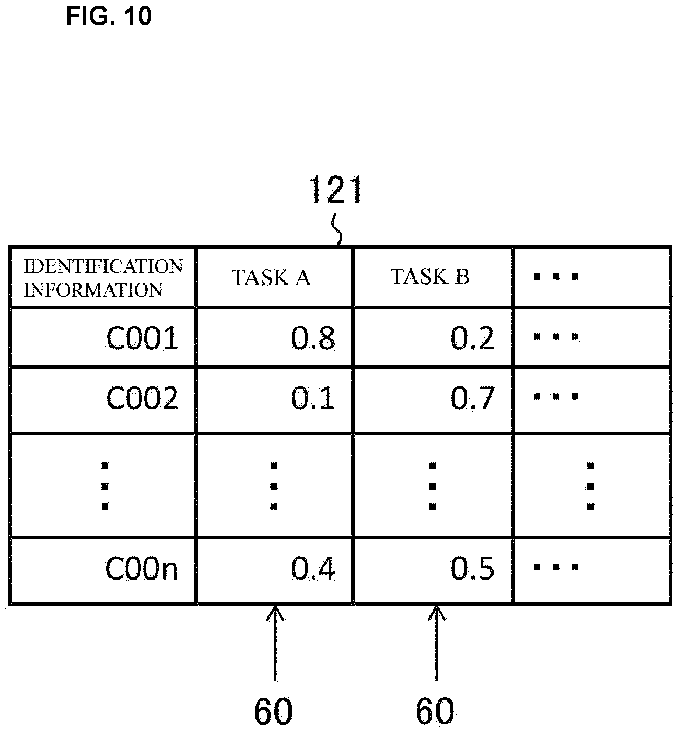

FIG. 10 illustrates an example of a form of the existing task information 121 according to the present embodiment. In the example in FIG. 10, the existing task information 121 is in a table format, and the second column and onward in the table correspond to the respective existing weight sets 60. In the example in FIG. 10, the second column corresponds to the existing weight set 60 for the task A, and third column corresponds to the existing weight set 60 for the task B. Identification information for identifying the source from which the existing learning data 40 is acquired (that is, sensor group S) is stored in the first column. The weights in each record (row) are associated with existing inference models 50 generated for an existing inference task based on existing learning data 40 obtained by the same sensor group S. The priorities defined by the weights, in both of the existing weight sets 60 and the object weight set 65, indicate how the corresponding inference models (50, 55) are prioritized. The priorities may include that, by designating "0", the associated inference model (50, 55) will not be used to solve an inference task, for example. Note that the data format of the existing task information 121 is not limited to this exemplary table format, as long as being able to retain information regarding the existing weight set 60, and may be determined as appropriate depending on the embodiment.

In the example in FIG. 10, a scenario is envisioned in which n existing inference models 50 are generated from existing learning data 40 obtained by n shared sensor groups S, for each existing inference task. That is, a scenario is envisioned in which the sensor groups S that are the same between different existing inference tasks are used to generate the existing inference models 50. However, the relationship between the existing inference tasks and the sensor groups S used to generate the existing inference models is not limited to this example. The sensor groups S to be used need not be the same between different existing inference tasks, as long as sensor groups S that are at least partially shared between the different existing inference tasks are used to generate existing inference models 50. In at least one of the plurality of existing inference tasks, a sensor group S that is not used to generate existing inference models 50 to be used in the other existing inference tasks may be used to generate existing inference models 50. In this case, the weights set to the existing inference models 50 generated using the sensor group S that is not used to generate existing inference models 50 of the other existing inference tasks may be neglected in the series of processes regarding the exemplary operation for generating the object weight set 65. Alternatively, by adding weights for the other existing inference task as appropriate, adjustments may be made such that the number of weights is the same among the existing weight sets 60. The method for adding weights may be determined as appropriate. For example, a weight "0" indicating being not used may be added to the existing weight sets 60 of the other existing inference tasks.

The existing task information 121 described above may be generated as appropriate. For example, the existing task information 121 may be generated by, every time an existing weight set 60 is generated for an existing inference task (that is, a plurality of existing weights are determined such that the existing inference task is appropriately carried out), manually or automatically accumulating the information regarding the generation record. The information regarding the past generation record may be accumulated in any computer including the parameter adjustment apparatus 1. As a result, the existing task information 121 may be stored in a predetermined storage region. The predetermined storage area may be the RAM in the control unit 11, the storage unit 12, an external storage apparatus, or a storage medium, or a combination of these, for example. In this case, the control unit 11 can acquire the existing task information 121 by accessing the predetermined storage region. In FIG. 2 described above, a scenario is envisioned in which the storage unit 12 is selected as the predetermined storage region, or the existing task information 121 acquired by accessing another storage region is saved in the storage unit 12. Upon acquiring the existing task information 121, the control unit 11 advances the processing to the next step S202.

### (Step S202)

In step S202, the control unit 11 operates as the degree of association calculating unit 112, and calculates the degrees of association 123 between the object inference task and the existing inference tasks, according to the similarities in objective between the object inference task and the existing inference tasks.

The information indicating the objectives of the inference tasks may be acquired as appropriate. For example, the information indicating the existing inference tasks may be saved in a predetermined storage region as the objective information 70 along with the existing task information 121. In this case, the control unit 11 can acquire the information indicating the existing inference tasks by accessing the predetermined storage region. Alternatively, the objective information 70 may be acquired by a manual operation such as an operator's input. The configuration of the objective information 70 is not limited in particular, as long as the objectives of the existing inference tasks can be represented, and may be determined as appropriate depending on the embodiment. The objective information 70 may be constituted by image data, sound data, numerical data, text data, or sensing data of another type, for example. The same applies to the information indicating the objective of the object inference task.

The indicator for calculating the degree of association 123 may be set as appropriate, as long as the similarity in objective between inference tasks can be evaluated. The distance between locations related to the inference tasks may be used as an exemplary indicator. That is, the control unit 11 may calculate the degrees of association 123 according to the distances between the locations related to the existing inference tasks and the location related to the object inference task. The location related to an inference task may be specified by a location where the inference task is to be performed (e.g., the site at which the flow of people is estimated, the district for which weather is predicted), or a location related to carrying out the inference task or generation of an inference model such as the location at which the sensor group S is arranged for acquiring learning data (40, 45) or object data for which the inference task is to be carried out. The information indicating the location may be obtained by an operator's input, or may also be obtained by a sensor such as a GPS (global positioning system) module. The control unit 11 may calculate the degree of association 123 between an object existing inference task and the object inference task to have a larger value as the distance between the location related to the object existing inference task and the location related to the object inference task decreases. On the other hand, the control unit 11 may calculate the degree of association 123 to have a smaller value as the distance increases. According to this calculation method, in a case where an inference task that may depend on the observation point, the degrees of association 123 between the object inference task and the existing inference tasks can be appropriately calculated.

Semantic similarities between terms indicating inference tasks may be used as another exemplary indicator. That is, the control unit 11 may also calculate the degrees of association 123 according to the semantic similarities between terms indicating the existing inference tasks and the object inference task that are measured by language processing. The semantic similarity indicates the degree of semantic similarity between linguistic representations. A known language processing method may be adopted to calculate the semantic similarity. The control unit 11 may calculate the degree of association 123 between an existing inference task and the object inference task to have a larger value as the semantic similarity between the object existing inference task and the object inference task increases. On the other hand, the control unit 11 may calculate the degree of association 123 to have a smaller value as the semantic similarity decreases. According to this calculation method, in cases where the objectives of inference tasks are verbalized, the degrees of association 123 between the object inference task and the existing inference tasks can be appropriately calculated.

Also, the degree of similarity between material objects related to inference tasks may be used as another exemplary indicator. That is, the control unit 11 may calculate the degrees of association 123 according to the degrees of similarity between material objects related to the existing inference tasks and the object inference task. A material object related to an inference task pertains to a feature inferred by the inference task, and may be an object, a person, an event, or the like regarding which inference is to be performed. In the case of visual inspection described above, the material object is a product to be inspected, or a defect to be detected, for example. The degree of similarity between material objects may be calculated as appropriate. For example, when material objects are verbalized, the degree of similarity between material objects may be calculated as a semantic similarity between terms, similarly to the case described above. As another example, in the case of visual inspection, when the material objects are products, and the model numbers of the products are given, the control unit 11 may calculate the degree of similarity between material objects using the degree of similarity between model numbers. The control unit 11 may also calculate the degree of association 123 between an object existing inference task and an object inference task to have a larger value as the degree of similarity between the objects respectively related to the object existing inference task and the object inference task increases. On the other hand, the control unit 11 may also calculate the degree of association 123 to have a smaller value as the degree of similarity between the related material objects decreases. According to this calculation method, the degrees of association 123 between an object inference task and existing inference tasks can be appropriately calculated based on the degrees of similarity between material objects related to the inference tasks.

Furthermore, the degree of similarity between environments in which inference tasks are carried out may be used as another exemplary indicator. That is, the control unit 11 may calculate the degrees of association 123 according to the degrees of similarity between the environments in which existing inference tasks and an object inference task are respectively carried out. The environment may be specified by observation conditions such as the attribute of an observation object, the location at which observation is performed, the sensor arrangement relative to an observation object, the installation angle of a sensor, or the conditions of external factors other than sensors, for example. The degree of similarity between environments may be calculated as appropriate. For example, the information indicating an environment may be digitized in the items of the sensor observation conditions. The digitization may be performed by manual input. Alternatively, the digitized information indicating an environment may be obtained by observing the environment using a sensor (sub-sensor) different from the sensors constituting a sensor group S to be used to acquire object data for which an inference task is carried out. In this case, the control unit 11 may also calculate the degree of similarity between environments by the distance between obtained numerical values. Specifically, the control unit 11 may evaluate that the degree of similarity between environments is higher as the distance between numerical values is smaller. In correspondence therewith, the control unit 11 may also calculate the degree of association 123 between an object existing inference task and an object inference task to have a larger value as the degree of similarity between the environments in which the object existing inference task and the object inference task are respectively carried out increases. On the other hand, the control unit 11 may also calculate the degree of association 123 to have a smaller value as the degree of similarity between the environments in which the inference task is carried out decreases. According to this calculation method, the degrees of association 123 between an object inference task and existing inference tasks can be appropriately calculated based on the similarity between the environments in which the inference tasks are carried out.

The control unit 11 may calculate the degrees of association 123 between an object inference task and existing inference tasks by evaluating the similarities in objective between the object inference task and the existing inference tasks, using one of the methods described above. Note that the method of calculating the degrees of association 123 is not limited to the example described above, and may be determined as appropriate depending on the embodiment. The control unit 11 may also calculate the degrees of association 123 according to the correlation between sets of object data that are obtained in the environments in which the existing inference tasks and the object inference task are respectively carried out. Upon calculating the degrees of association 123 between the object inference task and the existing inference tasks, the control unit 11 advances the process to the next step S203.

### (Step S203)

In step S203, the control unit 11 operates as the weight determining unit 113, and determines the plurality of object weights that constitute the object weight set 65, from the plurality of existing weights that constitute the existing weight sets 60 indicated by the existing task information 121, according to the calculated degrees of association 123. With this, the control unit 11 generates the object weight set 65 to be used for the object inference task.

The method for generating the object weight set 65 is not limited in particular, as long as an existing weight set 60 of an existing inference task is more highly prioritized, as the degree of association 123 of that existing inference task increases. For example, the control unit 11 may calculate a plurality of object weights that constitute the object weight set 65 by weighted-adding or weighted-averaging the sets of plurality of existing weights that respectively constitute the existing weight sets 60, according to the calculated degrees of association 123. In this case, the control unit 11 may add corresponding weights of the existing weight sets 60. Alternatively, the control unit 11 may extract the existing weight set 60 of an existing inference task whose degree of association 123 is the highest, from the plurality of existing weight sets 60, and adopt the extracted existing weight set 60 as the object weight set 65 as is. Upon generating the object weight set 65, the control unit 11 advances the process to the next step S204.

Note that, in the present embodiment, a scenario is envisioned in which the plurality of different sensor groups S used for generating the inference models (50, 55) are the same between the object inference task and the existing inference tasks. The weights set to the existing inference models 50 generated using the same sensor group S are used to determine the weight to be set to the corresponding object inference model 55. However, the sensor groups S to be used to generate the object inference models 55 need not satisfy this condition. That is, the sensor groups S used to generate the inference models (50, 55) need not be the same between the object inference task and the existing inference tasks. Accordingly, an object inference model 55 may be present that is generated using a sensor group S that is not used to generate the existing inference models 50 used to generate the existing inference tasks. In this case, the weights to be set to the object inference model 55 may be determined as appropriate by an operator's input or the like.

### (Step S204)

In step S204, the control unit 11 operates as the output unit 114, and generate weight information 125 indicating the generated object weight set 65. Also, the control unit 11 outputs the generated weight information 125 to a predetermined output destination.

The predetermined output destination may be selected as appropriate. For example, the predetermined output destination may be the inference apparatus 3 that uses the plurality of object inference models 55. The control unit 11 may transmit the weight information 125 to the inference apparatus 3 using the communication interface 13 via a network. In accordance therewith, in the inference apparatus 3, the weights indicated by the provided weight information 125 may be automatically set such that the weights can be used to integrate the inference results of the object inference models 55. Note that the method for setting the weights to a usable state is not limited to this example. For example, in order to prompt an operator to perform an operation to set the weights to the object inference models 55, the provided weight information 125 may be output through the output apparatus 36 or the like of the inference apparatus 3. Accordingly, the operator may manually set the weights.

As another example, the predetermined output destination may be the output apparatus 16 or an output apparatus of another computer. In this case as well, an operator may manually set the weights in the inference apparatus 3. Also, as yet another example, the predetermined output destination may be the aforementioned predetermined storage region. In this case, outputting the weight information 125 may be saving the weight information 125 in the predetermined storage region. The saved weight information 125 may be provided to the inference apparatus 3 as appropriate. Accordingly, the weights may be set in the inference apparatus 3 automatically or manually as appropriate.

When another inference apparatus that uses the plurality of object inference models 55 (that is, carries out the object inference task) is present, the weight information 125 may be similarly provided to the other inference apparatus. Upon completing outputting the weight information 125, the control unit 11 ends the procedure regarding this exemplary operation.

### (Integration method)

Note that the object weights that constitute the object weight set 65 specify the priorities of inference results of the corresponding object inference models 55 when integrating the inference results of the object inference models 55. Similarly, the existing weights that constitute the existing weight sets 60 specify the priorities of inference results of the corresponding existing inference models 50 when integrating the inference results of the existing inference models 50. The method of integrating inference results according to the weights may be selected as appropriate depending on the embodiment.

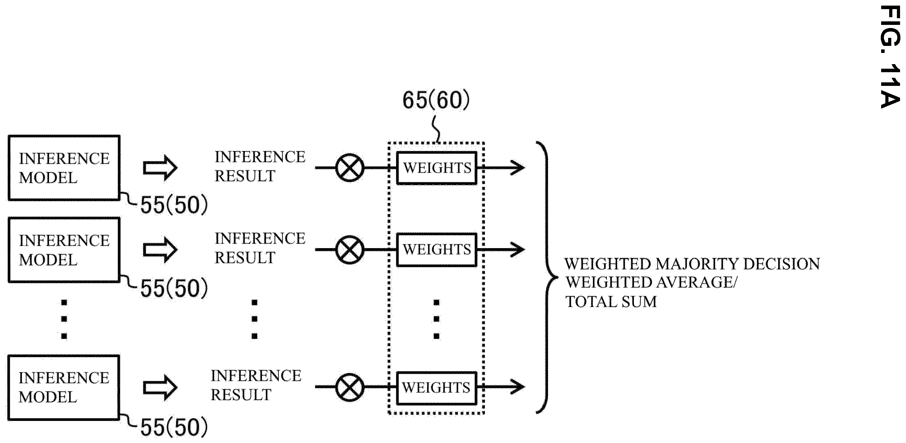

FIG. 11A schematically illustrates an example of a method for integrating inference results of the inference models (50, 55) using the weight sets (60, 65). In the example in FIG. 11A, the weights that constitute the weight sets (60, 65) are used for weighting the output values of the inference models (50, 55). Specifically, when the inference is to identify (sort), integrating the inference results of the inference models (50, 55) may be to perform a weighted majority decision on the inference results of the plurality of inference models (50, 55) according to the plurality of weights. On the other hand, when the inference is to regress and the inference results of the inference models (50, 55) are numerical values, integrating the inference results of the inference models (50, 55) may be to weight the inference results of the plurality of inference models (50, 55) according to the plurality of weights, and to calculate an average or a total sum of the weighted inference results. In these cases, the configurations of the inference models (50, 55) may be the same, or may not be the same, as long as the outputs thereof can be integrated.

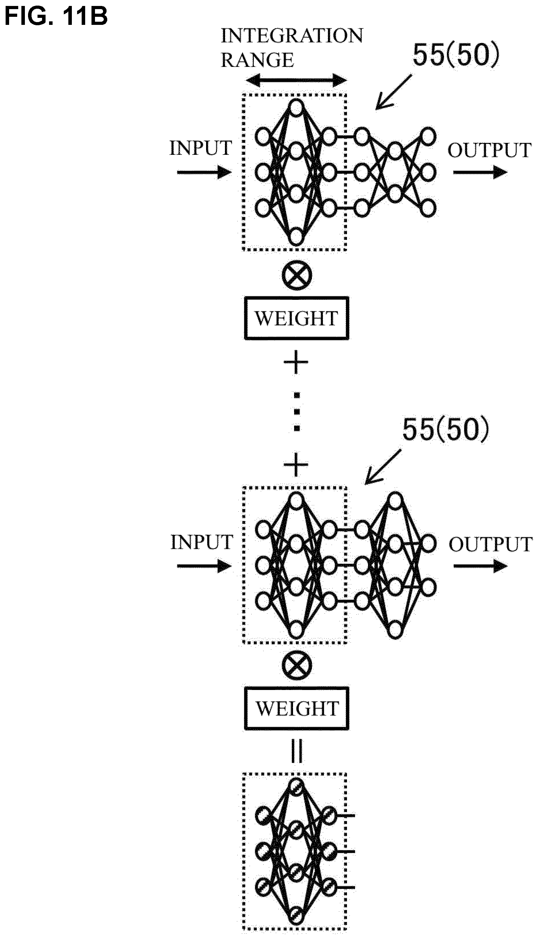

FIG. 11B schematically illustrates another example of a method of integrating inference results of the inference models (50, 55) using the weight sets (60, 65). In the example in FIG. 11B, the inference models (50, 55) are at least partially integrated according to the weights that constitute the weight sets (60, 65). With this, the inference results of the inference models (50, 55) are integrated. Specifically, when this integration method is adopted, the inference models (50, 55) are each configured to include at least one computation parameter to be used in a shared computation of the related tasks. That is, the inference models (50, 55) are configured to have at least partially the same structure.

For example, as illustrated in FIG. 11B, when the inference models (50, 55) are constituted by neural networks, the inference models (50, 55) are configured to include one or more layers having the same number of neurons and the same connection relationship. As another example, when the inference models (50, 55) are constituted by regression models, the inference models (50, 55) are each configured to include at least one of a coefficient and a constant term that are used in the same computation.

The range to be integrated may be selected as appropriate from a range in which the structures of the inference models (50, 55) match. In the example in FIG. 11B, the inference models (50, 55) are each constituted by a six-layer neural network, and the structure from the input layer to the fourth layer is the same between the inference models (50, 55). Also, the range from the input layer to the third layer is selected as the integration range. The integration range may be selected by an operator's designation.

In accordance therewith, as illustrated in FIG. 11B, integrating the inference results of the inference models (50, 55) may be weighting the values of at least one computation parameter to be used in the shared computation of the inference models (50, 55), and to calculate an average or a total sum of the weighted values of the at least one computation parameter. With the methods illustrated in FIGS. 11A and 11B, the inference results of the inference model (50, 55) can be appropriately integrated, and can accordingly derive a result obtained by solving the inference task.

### [Inference apparatus]

FIG. 12 is a flowchart illustrating an example of a procedure of the inference apparatus 3 according to the present embodiment. The procedure described below is an example of the inference method. Note that the procedures described below are merely examples, and each step may be changed to the extent possible. Moreover, in the procedures described below, steps may also be omitted, replaced, or added as appropriate depending on the embodiment.

### (Step S301)

In step S301, the control unit 31 operates as the acquiring unit 311, and acquires object data 321. The object data 321 is a sample for which an object inference task is carried out. The object data 321 may be constituted by image data, sound data, numerical data, text data, or sensing data of another type, for example, and may be selected depending on the details of the object inference task.

The method for acquiring the object data 321 may be selected as appropriate depending on the embodiment. For example, as in the above-described case where an inference task is carried out in an inspection environment that is different from the learning environment, there are cases where an object inference model 55 is generated assuming that the object inference model 55 is used for observation data obtained by a sensor group S that is different from the sensor groups S used in the learning environment, and is arranged in an environment in which the object inference task is carried out (in the following, this case is referred to as a "first case"). In this first case, the object data 321 may be acquired from a sensor group S that is different from the plurality of different sensor groups S that are respectively used to generate the object inference models 55.

On the other hand, as in the above-described case where comprehensive weather in a certain district is predicted from weather prediction results at a plurality of observation points, object inference models 55 may be generated assuming that the object inference models 55 are used for observation data obtained by the sensor groups S that are used to generate the object inference models, for example (in the following, this case is referred to as a "second case"). In this second case, the object data 321 may be acquired from the plurality of different sensor groups S that are used to generate the respective object inference models 55.

The path through which the object data 321 is acquired is selected as appropriate depending on the embodiment. When the inference apparatus 3 is directly connected to the sensor groups S, the control unit 31 may directly acquire the object data 321 from the sensor groups S. On the other hand, when the sensor groups S are connected to another computer, the control unit 31 may acquire the object data 321 from the other computer via a network, a storage medium, or the like. Upon acquiring the object data 321, the control unit 31 advances the processing to the next step S302.

### (Step S302)

In step S302, the control unit 31 operates as the inference unit 312, and sets the object inference models 55 by referring to the object learning result data 225 of the object inference models 55. Also, the control unit 31 sets object weights to the object inference models 55 by referring to the weight information 125. Also, the control unit 31 integrates the inference results of the object inference models 55 for the acquired object data 321 according to the set object weights.

The control unit 31 may adopt any of the methods illustrated in FIGS. 11A and 11B to integrate inference results. When the method illustrated in FIG. 11A is adopted, the control unit 31 inputs the object data 321 to the object inference models 55, and performs the computation processes of the object inference models 55. With these computation processes, the control unit 31 acquires the output values of the object inference models 55. Then, the control unit 31 integrates the output values of the object inference models 55 after the output values are weighted, with the method illustrated in FIG. 11A. On the other hand, when the method illustrated in FIG. 11B is adopted, the control unit 31 integrates the values of the computation parameters in the integration range of the object inference models 55 according to the object weights. The control unit 31 reflects the integration result of the computation parameters, in the integration range, of the object inference models 55, and then inputs the object data 321 to the object inference models 55, and performs the computation processes of the object inference models 55. With these computation processes, the control unit 31 acquires the output values of the object inference models 55. Then, the control unit 31 integrates the output values of the object inference models 55. Integration of the output values may be performed by majority decision, or calculating an average or a total sum. Note that, when these computations are performed, in the aforementioned first case, the control unit 31 inputs the object data 321 obtained by another sensor group S to the object inference models 55. On the other hand, in the aforementioned second case, the control unit 31 inputs the object data 321 obtained by the sensor groups S to the corresponding object inference models 55. With these series of processes, the control unit 31 can solve the object inference task for the object data 321 using the plurality of object inference models 55 and the object weight set 65. Upon acquiring the result of solving the object inference task, the control unit 31 advances the processing to the next step S303.

Note that, before starting operation, the control unit 31 may verify whether or not a solution of the object inference task can be appropriately obtained with the object weights that constitute the object weight set 65, using verification data obtained in the environment in which the object inference task is carried out. The verification data may be similarly configured as the object learning data 45. In this case, the control unit 31 may fine-tune the values of the object weights such that the solution derived by the aforementioned integration, with respect to the verification data, matches the solution of the object inference task, by using machine learning or another optimizing method. This fine tuning may be performed by the parameter adjustment apparatus 1. In this case, the parameter adjustment apparatus 1 may include the object inference models 55 by retaining the object learning result data 225 of the object inference models 55.

### (Step S303)

In step S303, the control unit 31 operates as the output unit 313, and outputs information regarding the result of solving the object inference task.

The output destination and the details of the information to be output may be determined as appropriate depending on the embodiment. For example, the control unit 31 may output the result obtained by solving the object inference task in step S302 to the output apparatus 36 as is. Also, for example, the control unit 31 may execute a predetermined information process based on the result of solving the object inference task. Then, the control unit 31 may output the result of executing the information process as information regarding the result of solving the object inference task. Outputting the result of executing the information process may include outputting a specific message according to the result of solving the object inference task, controlling an apparatus to be controlled according to the result of solving the object inference task, or the like. The output destination may be the output apparatus 36, an output apparatus of another computer, or an apparatus to be controlled, for example.

Upon completing outputting information regarding the result of solving the object inference task, the control unit 31 ends the procedure regarding this exemplary operation. Note that the control unit 31 may continuously and repeatedly execute the series of information processes in steps S301 to S303 for a predetermined period of time. The repetition timing may be determined as appropriate. With this, the inference apparatus 3 may continuously carry out the object inference task. The existing inference tasks may also be similarly carried out with a procedure similar to the procedure in steps S301 to S303 described above, by any computer including the inference apparatus 3.

### [ Characteristics]

As described above, in the present embodiment, as a result of utilizing the past record of the existing weight sets 60 (existing task information 121) that are respectively generated for the plurality of existing inference tasks by the parameter adjustment apparatus 1 in steps S202 and S203, at least a portion of the operations to generate the object weight set 65 to be used in the object inference task can be automated. Therefore, according to the present embodiment, in a situation in which a plurality of different inference tasks are set, the costs for introducing a plurality of inference models in order to solve the object inference task can be reduced. In the inference apparatus 3, the time and effort can be reduced for determining the weights of the object inference models 55 in order to carry out the object inference task in step S302.

### 4. Modifications

Although an embodiment of the present invention has been described above in detail, the above descriptions are merely examples of the present invention in all aspects. Needless to say, various improvements and modifications can be made without departing from the scope of the present invention. For example, the following modifications are possible. Note that, in the following description, the same constituent elements as the constituent elements described in the above embodiment are assigned the same reference numerals, and descriptions of the same points as the points described in the above embodiment are omitted as appropriate. The following modifications may be combined as appropriate.

The inference system 100 according to the embodiment described above may be applied to any scenario in which an inference task is carried out for data of a predetermined type using a plurality of inference models.

For example, the inference system 100 according to the embodiment described above may be applied to a case where the inference results of a plurality of inference models are integrated in order to improve the accuracy of an inference task with respect to sensing data that is obtained in a different environment. In this case, the inference tasks and the related tasks may be to perform inference regarding a feature of the same time with respect to sensing data of the same type. The inference models (50, 55) may be generated based on learning data (40, 45) generated using sensor groups S that are operated in different environments. The environment may be specified by observation conditions such as the attribute of an observation object, the location at which observation is performed, the sensor arrangement relative to an observation object, the installation angle of a sensor, or the conditions of external factors other than sensors, for example. The existing inference tasks may be carried out for object data obtained in an environment different from the environment in which the existing learning data 40 has been obtained. The object inference task may be carried out for object data 321 obtained in an environment different from the environment in which the existing learning data 40 has been obtained and the environment in which the existing inference tasks are carried out.

Also, as another example, the inference system 100 according to the embodiment may be applied to a case where the inference results of a plurality of inference models are integrated in order to solver a higher-order inference task. In this case, the inference task may perform inference regarding a higher-order feature than the feature regarding which inference is performed by the related tasks. The inference models (50, 55) may be configured to perform inference regarding low order features that are different to each other. The existing inference tasks may perform inference regarding features that are different to each other for object data obtained in any environment. In accordance therewith, the object inference task may perform inference regarding a feature that is still different from those of the existing inference tasks for object data obtained in any environment. Alternatively, the existing inference tasks may perform inference regarding a specific feature for object data obtained in different environments. In correspondence therewith, the object inference task may perform inference regarding a specific feature for object data obtained in an environment that is still different from the environments in which the existing inference tasks are carried out.

For example, the inference system 100 according to the embodiment described above may be applied to a scenario in which inference regarding visual inspection of products is performed (inspection-related inference task is carried out), a scenario in which an event related to weather or an event influenced by weather is inferred (weather-related inference task is carried out), a scenario in which an event regarding a flow of people or an event influence by the flow of people is inferred (flow of people-related inference task is carried out), a scenario in which an event regarding a state of a person is inferred (diagnosis-related inference task is carried out), or the like. In the following, examples in which the application scenario is limited will be illustrated.

### (A) Scenario in which visual inspection of products is performed

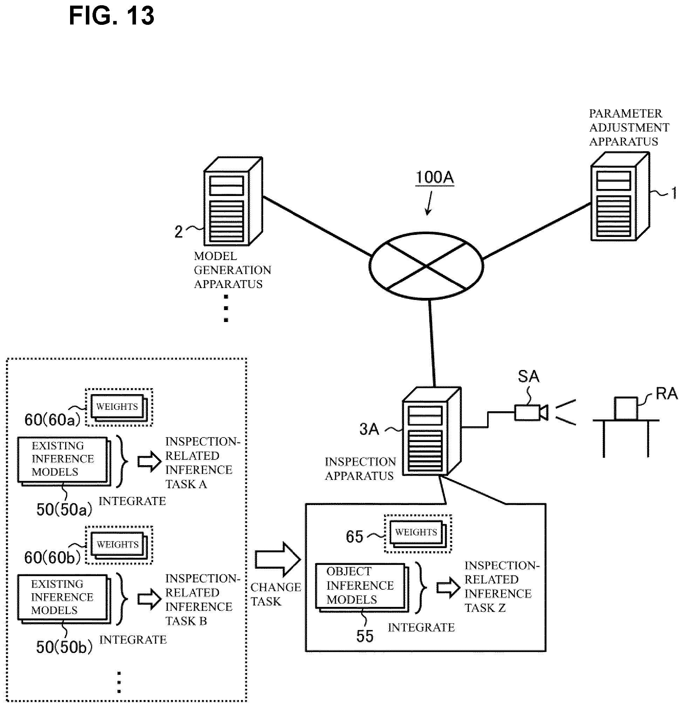

FIG. 13 schematically illustrates an example of a scenario to which an inspection system 100A according to a first example is applied. The first example is an example in which the above-described embodiment is applied to a scenario in which visual inspection of products RA is performed using image data obtained by cameras SA. The inspection system 100A according to the first example includes the parameter adjustment apparatus 1, the model generation apparatus 2, and an inspection apparatus 3A. The inspection apparatus 3A is an example of the inference apparatus 3 described above.

The data used in the first example (learning data (40, 45), object data 321) is image data obtained by the cameras SA. The type of the cameras SA is not limited in particular, and may be selected as appropriate depending on the embodiment. The cameras SA may be an ordinary RGB camera, a depth camera, or an infrared camera, for example. The cameras SA may be arranged as appropriate at a location from which the products RA can be shot. Note that the configuration of the sensor group S is not limited to this example. The sensor group S may include a sensor other than the cameras SA, and in correspondence therewith, the data to be used may include sensing data other than image data.

The product RA may be a product that is conveyed in a production line such as an electronic apparatus, an electronic component, an automotive component, medicine, or food, for example. The electronic component may be a substrate, a chip capacitor, liquid crystal, or a relay winding wire, for example. The automotive component may be a connecting rod, a shaft, an engine block, a power window switch, or a panel, for example. The medicine may be a packaged tablet, or a tablet that is not packaged, for example. The product may be a final product that is generated after completing production processes, an intermediate product that is generated in the middle of production processes, or an initial product that is prepared before being introduced into the production process. The defects regarding which visual inspection is performed may be a flaw, a smudge, a crack, a hit, a burr, uneven color, paint stripping, or contamination, for example.

In the first example, the inference results of the inference models may be integrated in order to improve the accuracy of visual inspection in a different environment. In this case, the inference tasks and the related tasks may perform inference regarding defects for image data. Performing inference regarding defects may be constituted by determining whether or not a defect is included in the product RA, determining the probability that a defect is included in the product RA, identifying the type of a defect included in the product RA, or specifying the range of a defect included in the product RA, or a combination of these. The inference models (50, 55) may be generated based on learning data (40, 45) that are generated using cameras SA that are operated in different environments. The environment of visual inspection may be specified by attributes of a production line/factory, attributes of the product RA, model numbers of the cameras SA, arrangement of the cameras SA relative to the product RA, installation angles of the cameras SA, and observation conditions such as illumination conditions, ambient light conditions, and background conditions.

Existing inference tasks may be carried out for object data (image data) obtained in an environment different from the environment in which the existing learning data 40 has been obtained. In contrast, an object inference task may be carried out for object data 321 (image data) obtained in an environment that is still different from the environment in which the existing learning data 40 has been obtained and the environments in which the existing inference tasks are carried out. As an example of a specific case, in the example in FIG. 13, an inspection-related inference task A (one existing inference task) may perform inference regarding defects of products RA in a first production line/first factory, and an inspection-related inference task B (another existing inference task) may perform inference regarding defects of products RA in a second production line/second factory that is different from the first production line/first factory. In accordance therewith, an inspection-related inference task Z (object inference task) may perform inference regarding defects of products RA in a third production line/third factory that is different from the first production line/first factory and the second production line/second factory. The degrees of association between the object inference task and the existing inference tasks may be calculated from the closeness in location between the production lines/factories, the similarity in attributes between the production lines/factories (e.g., features regarding the operation environment such as population density and an amount of waste to be discharged), the similarity in attributes between the products RA (e.g., type, structure, appearance pattern, or model number), or the similarity between other observation conditions, for example.

In addition, the inference tasks and the related tasks may perform inference regarding defects of a specific type. The existing inference tasks may perform inference regarding defects of different types, and the object inference task may perform inference regarding defects of a type that is still different from those of the existing inference tasks. As an example of a specific case, in the example in FIG. 13, the inspection-related inference task A may perform inference regarding defects of a first (e.g., flaw), and the inspection-related inference task B may perform inference regarding defects of a second type that is different from the first type (e.g., contamination). In accordance therewith, the inspection-related inference task Z may perform inference regarding defects of a third type that is different from the first and second types (e.g., paint stripping). In this case, the degrees of association between the object inference task and the existing inference tasks may be calculated from the similarity between defects to be inspected, in addition to the similarity between the observation conditions described above, for example.

Alternatively, in the first example, the inference results of the inference models may be integrated in order to solve a higher-order inference task. In this case, the related tasks may perform inference regarding defects based on observation data of sensor groups S that are respectively constituted by sensors of different types. In accordance therewith, the inference tasks may comprehensively perform inference regarding defects. The existing inference tasks may perform inference regarding defects for object data obtained in different environments. The object inference task may perform inference regarding defects for object data 321 obtained in an environment that is still different from the environments in which the existing inference tasks are carried out. The degrees of association between the object inference task and the existing inference tasks may be calculated from the similarities between the observation conditions described above.

In addition thereto, the related tasks may be tasks to extract a feature amount of image data such as an edge, regarding defects of a specific/any type. In accordance therewith, the inference tasks may be to perform inference regarding defects of a specific/any type. The existing inference tasks may be to perform inference regarding defects of a specific/any type for object data (image data) obtained in an environment different from the environment in which the existing learning data 40 has been obtained. In contrast, the object inference task may be to perform inference regarding defects of a specific/any type for object data 321 (image data) obtained in an environment that is still different from the environment in which the existing learning data 40 has been obtained and the environments in which the existing inference tasks are carried out. In this case, the degrees of association between the object inference task and the existing inference tasks may be calculated from the similarities between the observation conditions described above. Alternatively, the existing inference tasks may be to perform inference regarding defects of different types. In contrast, the object inference task may be to perform inference regarding a defect of a type that is still different from those of the existing inference tasks. In this case, the degrees of association between the object inference task and the existing inference tasks may be calculated from the similarities between the observation conditions described above, the similarities between defects to be inspected, or the like.

Other than what is described above, the first example may be similarly configured as the above-described embodiment. In the first example, the model generation apparatus 2 can generate inference models (50, 55) that can be used for visual inspection of products RA with a procedure similar to that of the above-described embodiment. The parameter adjustment apparatus 1 can generate an object weight set 65 that can be used in the object inference task with a procedure similar to that of the above-described embodiment.

The inspection apparatus 3A is a computer configured to carry out an object inference task regarding visual inspection using the plurality of object inference models 55 and the object weight set 65. The hardware configuration and the software configuration of the inspection apparatus 3A may be similar to those of the inference apparatus 3 described above. The inspection apparatus 3A may be a general purpose computer, a PLC (programmable logic controller), or the like, instead of an information processing apparatus that is specifically designed for the service to be provided.

The inspection apparatus 3A can execute visual inspection of products RA with a procedure similar to that of the inference apparatus 3 described above. That is, in step S301, the control unit of the inspection apparatus 3A acquires object data 321 (image data) of captured products RA from cameras SA that are operated in an environment in which inspection is performed. In step S302, the control unit executes inference regarding defects of product RA in the object data 321 using the plurality of object inference models 55 and the object weight set 65.

In step S303, the control unit output information regarding the result of solving the inspection-related inference task for the products RA. For example, the control unit may output the result of solving the inference regarding defects of the products RA to an output apparatus as is. Also, when it is determined that a product RA include a defect, the control unit may output a warning for notifying this fact to an output apparatus, for example. Also, when the inspection apparatus 3A is connected to a conveyor apparatus that conveys the products RA, the inspection apparatus 3A may control the conveyor apparatus such that products RA having no defect and products RA having defects are conveyed in different lines, based on the result of estimating defects, for example.

### (Characteristics)

According to the first example, as a result of utilizing the past record of the existing weight sets 60 generated for visual inspection in different existing conditions (environments, defect types, and the like), at least a portion of the operations to generate the object weight set 65 to be used in visual inspection in a new condition can be automated. Therefore, according to the first example, in a situation in which a plurality of different conditions for visual inspection are set, the costs for introducing a plurality of inference models in order to perform visual inspection in an object condition can be reduced.

### (B) Scenario in which event regarding weather or event influenced by weather is inferred

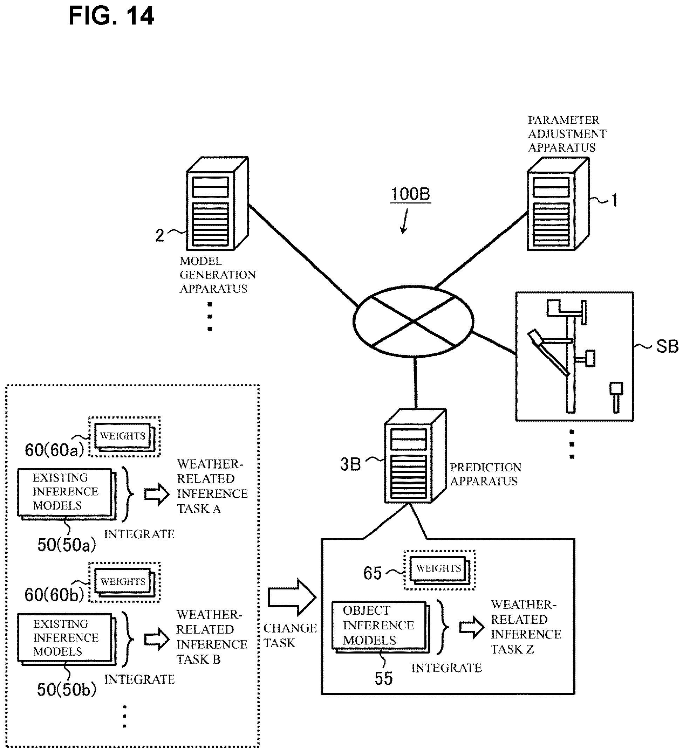

FIG. 14 schematically illustrates an example of a scenario to which a prediction system 100B according to a second example is applied. The second example is an example in which the above-described embodiment is applied to a scenario in which an event regarding weather or an event influenced by weather is inferred (predicted, in this example) using observation data obtained by sensors SB regarding weather. A prediction system 100B according to the second example includes the parameter adjustment apparatus 1, the model generation apparatus 2, and a prediction apparatus 3B. The prediction apparatus 3B is an example of the inference apparatus 3 described above. Note that, in the following, for the sake of description, an event regarding weather or an event influenced by weather may also be collectively referred to as a " weather-related event".

The data (learning data (40, 45), object data 321) used in the second example is observation data obtained by at least one sensor SB for performing an observation related to weather. The sensors SB constituting a sensor group S may be image sensors, thermometer, hygrometers, ombrometers, wind vanes and anemometers, solarimeters, illuminance meters, barometers, ultraviolet sensors, or soil sensors, for example. The prediction items of events regarding weather may be weather, a precipitation amount, temperature, humidity, a wind velocity, an atmospheric pressure, or an amount of ultraviolet light, for example. The prediction items of events influenced by weather may be power generation amount of natural energy (e.g., solar light, hydraulic power, wind power, geothermal energy), pollen counts, or plant cultivation conditions (e.g., probability of disease, number of fruit/flower, degree of flowering, growth degree of leaves, a plant harvest amount, harvest time), for example.

In the second example, the inference results of inference models may be integrated in order to improve the accuracy of weather-related inference tasks at different observation points. In this case, the inference tasks and the related tasks may predict any items of weather-related events. The inference models (50, 55) may be generated based on learning data (40, 45) obtained using sensors SB that are operated at different observation points. The existing inference tasks may be carried out for object data obtained at observation points different from the observation point at which the existing learning data 40 has been obtained. In contrast, the object inference task may be carried out for object data 321 obtained at an observation point that is still different from the observation points at which the existing learning data 40 has been obtained, and the observation points at which the existing inference tasks are carried out. As an example of a specific case, in the example in FIG. 14, a weather-related inference task A (one existing inference task) may predict weather at a first point, and a weather-related inference task B (another existing inference task) may predict weather at a second point that is different from the first point. In accordance therewith, a weather-related inference task Z (object inference task) may predict weather at a third point that is different from the first and second points. In this case, the degrees of association between the object inference task and the existing inference tasks may be calculated from the closeness between observation points, the similarity in environment between observation points, or the similarity between prediction items, for example. Note that, in the example described above, the observation points may be replaced by observation areas, and the inference results of the inference models may be integrated in order to improve the accuracy of weather-related inference tasks at different observation areas. In this case as well, the configuration is the same as that described above.

Alternatively, in the second example, the inference results of the inference models may be integrated in order to solve a higher-order inference task. In this case, the related tasks may be to estimate weather-related events at specific observation points that are different to each other. In accordance therewith, the inference tasks may be to estimate weather-related events in regions/districts respectively including the observation points of the related tasks. The inference models (50, 55) may be generated to perform inference regarding items to be estimated in inference tasks of weather-related events based on learning data (40, 45) obtained at the observation points. The existing inference tasks may be to perform estimation regarding different items of the weather-related events, and the object inference task may be to perform estimation regarding an item, of the weather-related events, that is still different from those of the existing inference tasks. The object data 321 may be constituted by observation data obtained at the observation points. As an example of a specific case, in the example in FIG. 14, a weather-related inference task A may be for predicting weather in one district, and a weather-related inference task B may be for predicting a precipitation amount in the district. In accordance therewith, a weather-related inference task Z may be to estimate a solar power generation amount in the district. In this case, the degree of association between the object inference task and the existing inference tasks may be calculated from the similarity between estimation items, for example.

Other than what is described above, the second example may be similarly configured as the above-described embodiment. In the second example, the model generation apparatus 2 can generate inference models (50, 55) that can be used for estimating weather-related events with a procedure similar to that of the above-described embodiment. The parameter adjustment apparatus 1 can generate an object weight set 65 that can be used in the object inference task with a procedure similar to that of the above-described embodiment.

The prediction apparatus 3B is a computer configured to carry out an object inference task regarding weather-related events using the plurality of object inference models 55 and the object weight set 65. The hardware configuration and the software configuration of the prediction apparatus 3B may be similar to those of the inference apparatus 3 described above. The prediction apparatus 3B may be a general purpose server, a general purpose computer, or the like, instead of an information processing apparatus that is specifically designed for the service to be provided.

The prediction apparatus 3B can execute estimation of weather-related events with a procedure similar to that of the inference apparatus 3 described above. That is, in step S301, the control unit of the prediction apparatus 3B acquires object data 321 from sensors SB operated at an observation point (or area/district) regarding which prediction is performed. In step S302, the control unit estimates the weather-related events based on the object data 321 using the plurality of object inference models 55 and the object weight set 65. In step S303, the control unit outputs information regarding the estimation result.

### (Characteristics)

According to the second example, as a result of utilizing the past record of the existing weight sets 60 generated for estimating weather-related events in different existing conditions (e.g., observation point, estimation items), at least a portion of the operations to generate the object weight set 65 to be used to estimate weather-related events in a new condition can be automated. Therefore, according to the second example, in a situation in which a plurality of different conditions for estimating weather-related events are set, the costs for introducing a plurality of inference models in order to estimate weather-related events in an object condition can be reduced.

### (C) Scenario in which event regarding flow of people or event influenced by flow of people is inferred

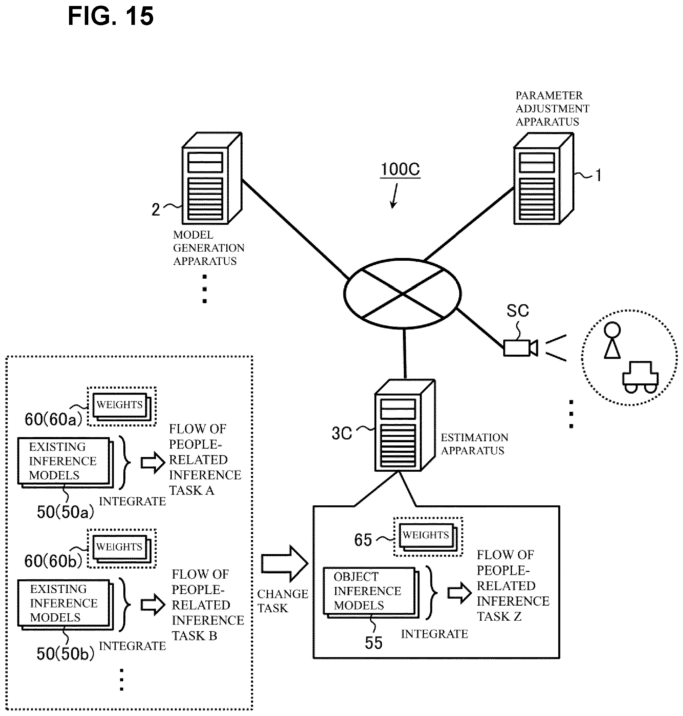

FIG. 15 schematically illustrates an example of a scenario to which an estimating system 100C according to a third example is applied. The third example is an example in which the above-described embodiment is applied to a scenario in which an event regarding the flow of people or an event influenced by the flow of people is inferred (estimated, in this example) using observation data obtained by sensors SC that observe the flow of people itself or events that influence the flow of people. The estimating system 100C according to the third example includes the parameter adjustment apparatus 1, the model generation apparatus 2, and an estimation apparatus 3C. The estimation apparatus 3C is an example of the inference apparatus 3 described above. Note that, in the following, for the sake of description, an event regarding the flow of people or an event influenced by the flow of people may also be collectively referred to as a "flow of people-related event".

The data (learning data (40, 45), object data 321) used in the third example is observation data obtained by at least one sensor SC for performing observation related to the flow of people. The flow of people may be the movement of people at a station or on a street. Alternatively, the flow of people may be the movement of vehicles (e.g., automobiles) on a road regarding which observation is performed. The events that influence the flow of people may be weather, train operation information, or road traffic information, for example. In accordance therewith, the sensors SC that constitute the sensor group S may be a camera (image sensor), a beacon, sensors for weather (e.g., the above-described sensor SB), or an input apparatus, for example. The input apparatus may be used to input various types of information such as train operation information or road traffic information, for example. The estimation items of events regarding the flow of people may be traffic amounts of people/vehicle, a congestion degree of people/vehicle, a moving path of people/vehicle, or density of people/vehicle, for example. The events influenced by the flow of people may be the time needed to arrive at any destination from the observation area, the probability that an accident or an event occurs, the probability that the traffic jam occurs, or the demands of goods, for example.

In the third example, the inference results of inference models may be integrated in order to improve the accuracy of flow of people-related inference tasks at different observation points. In this case, the inference tasks and the related tasks may estimate any items of flow of people-related events. The inference models (50, 55) may be generated based on learning data (40, 45) obtained using sensors SC that are operated at different observation points. The existing inference tasks may be carried out for object data obtained at observation points different from the observation point at which the existing learning data 40 has been obtained. In contrast, the object inference task may be carried out for object data 321 obtained at an observation point that is still different from the observation points at which the existing learning data 40 has been obtained, and the observation points at which the existing inference tasks are carried out. As an example of a specific case, in the example in FIG. 15, a flow of people-related inference task A (one existing inference task) may be to estimate a people congestion degree in one station, and a flow of people-related inference task B (another existing inference task) may be to estimate the people congestion degree at an intersection. In accordance therewith, a flow of people-related inference task Z (object inference task) may be to estimate the people congestion degree in one commercial facility. In this case, the degrees of association between the object inference task and the existing inference tasks may be calculated from the closeness between observation points, the similarity in environment between observation points, the similarity in environment between observation points, or the similarity between estimation items, for example. Note that, in the example described above, the observation points may be replaced by observation areas, and the inference results of the inference models may be integrated in order to improve the accuracy of weather-related inference tasks at different observation areas. In this case as well, the configuration is the same as that described above.

Alternatively, in the third example, the inference results of the inference models may be integrated in order to solve a higher-order inference task. In this case, the related tasks may estimate flow of people-related events at specific observation points that are different to each other. In accordance therewith, the inference tasks may estimate flow of people-related events in regions/districts respectively including the observation points of the related tasks. The inference models (50, 55) may be generated for performing inference regarding items to be estimated in inference tasks of flow of people-related events based on learning data (40, 45) obtained at the observation points. The existing inference tasks may be to perform estimation regarding different items of the flow of people-related events, and the object inference task may be to perform estimation regarding an item, of the flow of people-related events, that is still different from those of the existing inference tasks. The object data 321 may be constituted by observation data obtained at the observation points. As an example of a specific case, in the example in FIG. 15, a flow of people-related inference task A may be to estimate a traffic amount of people at one observation area, and a flow of people-related inference task B may be to estimate a moving path of people in the observation area. In accordance therewith, a flow of people-related inference task Z may be to estimate the demands of certain goods. In this case, the degree of association between the object inference task and the existing inference tasks may be calculated from the similarity between estimation items, for example.

Other than what is described above, the third example may be similarly configured as the above-described embodiment. In the third example, the model generation apparatus 2 can generate inference models (50, 55) that can be used for estimating flow of people-related events with a procedure similar to that of the above-described embodiment. The parameter adjustment apparatus 1 can generate an object weight set 65 that can be used in the object inference task with a procedure similar to that of the above-described embodiment.

The estimation apparatus 3C is a computer configured to carry out an object inference task regarding flow of people-related events using the plurality of object inference models 55 and the object weight set 65. The hardware configuration and the software configuration of the estimation apparatus 3C may be similar to those of the inference apparatus 3 described above. The estimation apparatus 3C may be a general purpose server, a general purpose computer, or the like, instead of an information processing apparatus that is specifically designed for the service to be provided.

The estimation apparatus 3C can execute estimation of flow of people-related events with a procedure similar to that of the inference apparatus 3 described above. That is, in step S301, the control unit of the estimation apparatus 3C acquires object data 321 from sensors SC operated at an observation point (or observation area) regarding which estimation is performed. In step S302, the control unit estimates the flow of people-related events based on the object data 321 using the plurality of object inference models 55 and the object weight set 65. In step S303, the control unit outputs information regarding the estimation result.

### (Characteristics)

According to the third example, as a result of utilizing the past record of the existing weight sets 60 generated for estimating flow of people-related events in different existing conditions (e.g., observation point, estimation items), at least a portion of the operations to generate the object weight set 65 to be used to estimate flow of people-related events in a new condition can be automated. Therefore, according to the third example, in a situation in which a plurality of different conditions for estimating flow of people-related events are set, the costs for introducing a plurality of inference models in order to estimate flow of people-related events in an object condition can be reduced.

### (D) Scenario in which event regarding state of person is inferred

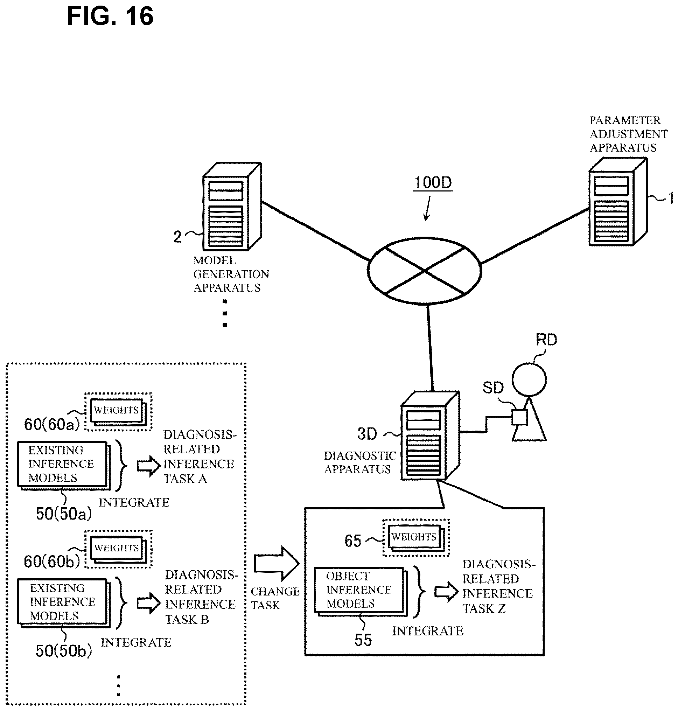

FIG. 16 schematically illustrates an example of a scenario to which a diagnostic system 100D according to a fourth example is applied. The fourth example is an example in which the above-described embodiment is applied to a scenario in which an event regarding the state of a person RD is inferred (diagnosed, in this example) using observation data obtained by sensors SD that observe the state of the person RD. The diagnostic system 100D according to the fourth example includes the parameter adjustment apparatus 1, the model generation apparatus 2, and a diagnostic apparatus 3D. The diagnostic apparatus 3D is an example of the inference apparatus 3 described above. Note that, in the following, for the sake of description, events regarding the state pf the person RD may also be collectively referred to as a "diagnosis-related event".

The data (learning data (40, 45), object data 321) used in the fourth example is observation data obtained by at least one sensor SD for observing the state of the person RD. The sensors SD that constitute the sensor group S may be a camera, an infrared sensor, a microphone, an input apparatus, a vital sensor, or a medical examination apparatus, for example. The vital sensor may be a blood-pressure gauge, a pulsimeter, a heart rate meter, an electrocardiographic monitor, an electromyograph, a clinical thermometer, an electro dermal activity sensor, a microwave sensor, an electroencephalograph, a magnetoencephalograph, an activity tracker, a glucometer, an ocular potentiometer, or an eye movement measuring instrument, for example. The medical examination apparatus may be a CT apparatus, or an MRI apparatus, for example. The inference items of the diagnosis-related event may relate to the health status of the person RD, and may be determining whether the person RD is healthy or not, determining whether or not there is a sign of falling ill, identifying the type of health status, or determining the probability of falling ill of interest, or a combination of these, for example. In one example, the person RD may be a driver of a vehicle, and the scenario in which the diagnosis-related event is inferred may be a scenario of inferring the state of the driver. In this case, the inference items of the diagnosis-related event may also include items related to the drivability of the driver such as a sleepiness degree, a fatigue degree, and a margin of capability, for example, in addition to the items related to the health status. In another example, the person RD may be an operator that works in a factory or the like, and the scenario of inferring the diagnosis-related events described above may be a scenario of inferring the state of an operator. In this case, the inference items of the diagnosis-related event may include items related to the work performance of the operator such as a sleepiness degree, a fatigue degree, or a margin of capability, for example, in addition to the items related to the health status.

In the fourth example, the inference results of inference models may be integrated in order to improve the accuracy of diagnosis-related inference tasks for persons RD having different attributes. In this case, the inference tasks and the related tasks may each infer any item of the diagnosis-related event. The inference models (50, 55) may be generated based on learning data (40, 45) obtained using sensors SD that are used to observe persons RD (examinees) having different attributes. The existing inference tasks may be carried out for object data regarding persons RD having attributes different from the attributes of the persons RD regarding which the existing learning data 40 has been obtained. In contrast, the object inference task may be carried out for object data 321 obtained for a person RD having an attribute that is still different from the attributes of the persons RD regarding which the existing learning data 40 has been obtained and the attributes of the persons RD for which the existing inference tasks are carried out. As an example of a specific case, in the example in FIG. 16, a diagnosis-related inference task A (one existing inference task) may be for determining whether a male in his 20s is healthy or not, and a diagnosis-related inference task B (another existing inference task) may be for determining whether a male in his 40s is healthy or not. In accordance therewith, a diagnosis-related inference task Z (object inference task) may be for determining whether a male in his 30s is healthy or not. In this case, the degrees of association between the object inference task and the existing inference tasks may be calculated from the similarity in attribute between persons RD, the similarity between observation conditions, or the similarity between diagnostic items, for example. The attributes of persons RD may be specified by age, height, weight, gender, or a lifestyle habit, for example. The observation conditions may be specified by the type or the model number of sensors SD, for example. Note that, in the example described above, the attributes of persons RD may be replaced by observation conditions, and the inference results of the inference models may be integrated in order to improve the accuracy of diagnosis-related inference tasks in different observation conditions. In this case as well, the configuration is the same as that described above.

Alternatively, in the fourth example, the inference results of the inference models may be integrated in order to solve a higher-order inference task. In this case, the related task may be to perform inference regarding diagnosis-related events based on observation data of sensor groups S that are constituted by different types of sensors SD. In accordance therewith, the inference tasks may be for comprehensively performing inference regarding diagnosis-related events. The existing inference tasks may be to perform inference regarding different items of diagnosis-related events. The object inference task may be to perform inference regarding an item, of the diagnosis-related events, that is still different from the inference items of the existing inference tasks. As an example of a specific case, in the example in FIG. 16, a diagnosis-related inference task A may be for determining whether or not there is a sign of a first disease, and a diagnosis-related inference task B may be for determining whether or not there is a sign of a second disease that is different from the first disease. In accordance therewith, a diagnosis-related inference task Z may be for determining whether or not there is a sign of a third disease that is different from the first and second diseases. In this case, the degrees of association between the object inference task and the existing inference tasks may be calculated from the similarity between diagnostic items, for example. Note that the items of the diagnosis-related events may be replaced by the attributes of persons RD or the observation conditions.

Other than what is described above, the fourth example may be similarly configured as the above-described embodiment. In the fourth example, the model generation apparatus 2 can generate inference models (50, 55) that can be used for estimating diagnosis-related events with a procedure similar to that of the above-described embodiment. The parameter adjustment apparatus 1 can generate an object weight set 65 that can be used in the object inference task with a procedure similar to that of the above-described embodiment.

The diagnostic apparatus 3D is a computer configured to carry out an object inference task regarding diagnosis-related events using the plurality of object inference models 55 and the object weight set 65. The hardware configuration and the software configuration of the diagnostic apparatus 3D may be similar to those of the inference apparatus 3 described above. The diagnostic apparatus 3D may be a general purpose computer, a mobile terminal such as a tablet terminal or a smartphone, or the like, instead of an information processing apparatus that is specifically designed for the service to be provided.

The diagnostic apparatus 3D can execute inference of diagnosis-related events with a procedure similar to that of the inference apparatus 3 described above. That is, in step S301, the control unit of the diagnostic apparatus 3D acquires object data 321 from sensors SD operated regarding a person RD who is diagnosed. In step S302, the control unit performs inference regarding diagnosis-related events based on the object data 321 using the plurality of object inference models 55 and the object weight set 65. In step S303, the control unit outputs information regarding the inference result.

### (Characteristics)

According to the fourth example, as a result of utilizing the past record of the existing weight sets 60 generated for inference regarding diagnosis-related events in different existing conditions (e.g., attributes of person RD, diagnostic items), at least a portion of the operations to generate the object weight set 65 to be used for inference regarding the diagnosis-related events in a new condition can be automated. Therefore, according to the fourth example, in a situation in which a plurality of different conditions for inference regarding the diagnosis-related events are set, the costs for introducing a plurality of inference models in order to perform inference regarding diagnosis-related events in an object condition can be reduced.

### INDEX TO THE REFERENCE NUMERALS

- 1: Parameter adjustment apparatus
- 11: Control unit
- 12: Storage unit
- 13: Communication interface
- 14: External interface
- 15: Input apparatus
- 16: Output apparatus
- 17: Drive
- 111: Information acquiring unit
- 112: Degree of association calculating unit
- 113: Weight determining unit
- 114: Output unit
- 121: Existing task information
- 125: Weight information
- 81: Parameter adjustment program
- 91: Storage medium
- 2: Model generation apparatus
- 21: Control unit
- 22: Storage unit
- 23: Communication interface
- 24: External interface
- 25: Input apparatus
- 26: Output apparatus
- 27: Drive
- 211: Data acquiring unit
- 212: Generating unit
- 213: Saving processing unit
- 220/225: Learning result data
- 82: Model generation program
- 92: Storage medium
- 3: Inference apparatus
- 31: Control unit
- 32: Storage unit
- 33: Communication interface
- 34: External interface
- 35: Input apparatus
- 36: Output apparatus
- 37: Drive
- 311: Acquiring unit
- 312: Inference unit
- 313: Output unit
- 321: Object data,
- 40: Existing learning data
- 45: Object learning data
- 50: Existing inference model
- 55: Object inference model
- 60: Existing weight set
- 65: Object weight set
- 70: Objective information
- S: Sensor group

## Claims

1. A parameter adjustment apparatus comprising:
an information acquiring unit for acquiring existing task information regarding a plurality of existing inference tasks,
wherein for each existing inference task, a plurality of existing inference models has been generated based on sets of existing learning data respectively obtained by a plurality of different sensor groups such that the existing inference models are respectively configured to carry out existing related tasks related to the existing inference task,
the existing inference tasks each being solved by integrating inference results of the corresponding existing inference models,
the existing task information indicating a plurality of existing weight sets that are each constituted by a plurality of existing weights for specifying priorities of inference results of corresponding existing inference models when integrating the inference results of the existing inference models, the existing weight sets being determined such that the respective existing inference tasks are appropriately carried out;
a degree of association calculating unit configured to calculate degrees of association between an object inference task and the existing inference tasks, according to similarities in objective between the object inference task and the existing inference tasks;
a weight determining unit configured to determine a plurality of object weights constituting an object weight set, according to the calculated degrees of association, from the plurality of existing weights of each of the plurality of existing weight sets that are indicated by the existing task information,
a plurality of object inference models being generated based on object learning data obtained by the plurality of different sensor groups such that the object inference models are configured to respectively carry out object related tasks related to the object inference task,
the object inference task being solved by integrating inference results of the object inference models, and
the determined object weights of the object weight set specifying, when integrating the inference results of the object inference models, priorities of inference results of the corresponding object inference models.

2. The parameter adjustment apparatus according to claim 1, further comprising
an output unit configured to output weight information indicating the object weight set, to an inference apparatus that uses the plurality of object inference models.

3. The parameter adjustment apparatus according to claim 1 or 2, wherein the degrees of association are calculated from distances between locations related to the existing inference tasks and a location related to the object inference task.

4. The parameter adjustment apparatus according to any one of claims 1 to 3, wherein the degrees of association are calculated from semantic similarities between terms that respectively indicate the existing inference tasks and the object inference task, the semantic similarities being measured by language processing.

5. The parameter adjustment apparatus according to any one of claims 1 to 4, wherein the degrees of association are calculated from degrees of similarity between material objects respectively related to the existing inference tasks and the object inference task.

6. The parameter adjustment apparatus according to any one of claims 1 to 5, wherein the degrees of association are calculated from degrees of similarity between environments in which the existing inference tasks and the object inference task are respectively carried out.

7. The parameter adjustment apparatus according to any one of claims 1 to 6, wherein integrating the inference results of the object inference models is constituted by performing a weighted majority decision on the inference results of the plurality of object inference models according to the plurality of object weights.

8. The parameter adjustment apparatus according to any one of claims 1 to 6,
wherein the inference results of the object inference models are constituted by numerical values, and
integrating the inference results of the object inference models is constituted by
weighting inference results of the plurality of object inference models according to the plurality of object weights, and
calculating an average or a total sum of the weighted inference results.

9. The parameter adjustment apparatus according to any one of claims 1 to 6,
wherein the object inference models include one or more computation parameters to be used in a shared computation of the object related tasks, and
integrating the inference results of the object inference models is constituted by
weighting values of the one or more computation parameters of the object inference models according to the object weights, and
calculating an average or a total sum of values of the weighted one or more computation parameters of the object inference models.

10. An inference apparatus comprising:
a data acquiring unit configured to acquire object data;
an inference unit configured to solve the object inference task for the acquired object data using the plurality of object inference models and the plurality of object weights of the object weight set determined by the parameter adjustment apparatus according to any one of claims 1 to 9; and
an output unit configured to output information regarding a result of solving the object inference task.

11. A parameter adjustment method in which a computer executes:
a step of acquiring existing task information regarding a plurality of existing inference tasks,
wherein for each existing inference task, a plurality of existing inference models has been generated based on sets of existing learning data respectively obtained by a plurality of different sensor groups such that the existing inference models are respectively configured to carry out existing related tasks related to the existing inference task,
the existing inference tasks each being solved by integrating inference results of the corresponding existing inference models,
the existing task information indicating a plurality of existing weight sets that are each constituted by a plurality of existing weights for specifying priorities of inference results of corresponding existing inference models when integrating the inference results of the existing inference models, the existing weight sets being determined such that the respective existing inference tasks are appropriately carried out;
a step of calculating degrees of association between an object inference task and the existing inference tasks, according to similarities in objective between the object inference task and the existing inference tasks;
a step of determining a plurality of object weights constituting an object weight set, according to the calculated degrees of association, from the plurality of existing weights of each of the plurality of existing weight sets that are indicated by the existing task information,
a plurality of object inference models being generated based on object learning data obtained by the plurality of different sensor groups such that the object inference models are configured to respectively carry out object related tasks related to the object inference task,
the object inference task being solved by integrating inference results of the object inference models, and
the determined object weights of the object weight set specifying, when integrating the inference results of the object inference models, priorities of inference results of the corresponding object inference models.

12. A parameter adjustment program for causing a computer to execute:
a step of acquiring existing task information regarding a plurality of existing inference tasks,
wherein for each existing inference task, a plurality of existing inference models has been generated based on sets of existing learning data respectively obtained by a plurality of different sensor groups such that the existing inference models are respectively configured to carry out existing related tasks related to the existing inference task,
the existing inference tasks each being solved by integrating inference results of the corresponding existing inference models,
the existing task information indicating a plurality of existing weight sets that are each constituted by a plurality of existing weights for specifying priorities of inference results of corresponding existing inference models when integrating the inference results of the existing inference models, the existing weight sets being determined such that the respective existing inference tasks are appropriately carried out;
a step of calculating degrees of association between an object inference task and the existing inference tasks, according to similarities in objective between the object inference task and the existing inference tasks;
a step of determining a plurality of object weights constituting an object weight set, according to the calculated degrees of association, from the plurality of existing weights of each of the plurality of existing weight sets that are indicated by the existing task information,
a plurality of object inference models being generated based on object learning data obtained by the plurality of different sensor groups such that the object inference models are configured to respectively carry out object related tasks related to the object inference task,
the object inference task being solved by integrating inference results of the object inference models, and
the determined object weights of the object weight set specifying, when integrating the inference results of the object inference models, priorities of inference results of the corresponding object inference models.
